# EUROPEAN PATENT APPLICATION

(11) **EP 4 586 355 A1**
(43) Date of publication of application: **16.07.2025**
(21) Application number: 22969706.5
(22) Date of filing: 29.12.2022
(51) Int. Cl.: H01M 10/0567, H01M 10/05, H01M 10/42

(54) **ELECTROLYTE COMPOSITION, SECONDARY BATTERY, BATTERY MODULE, BATTERY PACK, AND ELECTRICAL DEVICE**

(71) Applicant: Contemporary Amperex Technology (Hong Kong) Limited, Central (HK)
(72) Inventor: CHEN, Shigang, Ningde, Fujian 352100 (CN); ZHANG, Xinxin, Ningde, Fujian 352100 (CN); GUO, Bingkun, Ningde, Fujian 352100 (CN); LI, Xiaolong, Ningde, Fujian 352100 (CN); YAO, Shikang, Ningde, Fujian 352100 (CN); ZHOU, Qicheng, Ningde, Fujian 352100 (CN)
(74) Representative: Laufhütte, Dieter
(86) International application number: PCT/CN2022/143578
(87) International publication number: WO 2024/138559

(57) **Abstract**

This application provides an electrolyte composition, a secondary battery, a battery module, a battery pack, and an electrical device. The electrolyte composition is a non-Newtonian fluid electrolyte composition. The electrolyte composition can improve the impact resistance and safety of the battery by a thixotropic action that occurs in response to an applied external force.

## Description

### TECHNICAL FIELD

This application relates to the technical field of secondary batteries, and in particular, to an electrolyte composition, a secondary battery, a battery module, a battery pack, and an electrical device.

### BACKGROUND

In recent years, secondary batteries have been widely applied in energy storage power systems such as hydro, thermal, wind, and solar power stations, and in many other fields such as electric tools, electric bicycles, electric motorcycles, and electric vehicles, military equipment, and aerospace. With the universal application of the secondary batteries, the requirements on the performance, safety, and the like of the batteries are higher.

Currently, a liquid electrolyte and an all-solid electrolyte are two types of electrolytes commonly used in batteries. However, the liquid electrolyte is prone to generate dendrites on a negative electrode during cycling, result in a short circuit of the battery, and give rise to safety hazards; and the all-solid electrolyte can hardly form excellent interfacial contact with an electrode plate. Neither can meet the requirements of a new generation of electrochemical system in use.

### SUMMARY

This application is developed in view of the above subject matter. An objective of this application is to provide an electrolyte composition. The electrolyte composition can improve the impact resistance and safety of the battery by a thixotropic action that occurs in response to an applied external force.

According to a first aspect of this application, an electrolyte composition is provided. The electrolyte composition is a non-Newtonian fluid electrolyte composition.

The non-Newtonian fluid electrolyte composition exhibits a thixotropic behavior in response to an applied external force, thereby transitioning from a flowable state to a solid state, and in turn, effectively improving the safety against short-circuiting and the impact resistance of the battery. Moreover, compared with other quasi-solid electrolytes and liquid electrolytes, the non-Newtonian fluid electrolyte composition can achieve the minimum ohmic resistance and interface resistance of the electrolyte under a relatively low stacking pressure, thereby improving the assembling process of the battery.

A viscosity of the electrolyte composition is 1000 mPa·s to 50000 mPa·s after the electrolyte composition is rotary-stirred at 25 °C for 10 seconds at a speed of 12 rpm by using a 62# or 64# rotor of a Dveslvtjo rotary viscometer.

The non-Newtonian fluid electrolyte composition is of a high viscosity, and can effectively suppress gas production in the battery by virtue of the high viscosity in comparison with a battery containing a liquid electrolyte of similar constituents, thereby improving the cycle performance of the battery.

In any embodiment, the viscosity of the electrolyte composition increases by more than 100 mPa·s after the electrolyte composition is rotary-stirred at 25 °C for 10 minutes at a speed of 12 rpm by using a 62# or 64# rotor of a Dveslvtjo rotary viscometer in comparison with the viscosity of the electrolyte composition tested under the same conditions for 10 seconds.

The non-Newtonian fluid electrolyte composition does not comply with the Newtonian viscosity law specifying that the shear stress is in a nonlinear relationship with the shear strain rate. The non-Newtonian fluid electrolyte composition in this application is a shear thickening liquid with a viscosity increasing with the increase of the shear rate or shear time.

In any embodiment, a post-thixotropic loss factor of the non-Newtonian fluid electrolyte composition is lower than a pre-thixotropic loss factor by more than 10% as a decrease rate.

The non-Newtonian fluid electrolyte exhibits a thixotropic property. Impacted by an external force such as nail penetration or squeezing, the non-Newtonian fluid electrolyte composition transitions from a flowable state to a solid state. The transition of the phase state results in a decrease in the loss factor of the electrolyte composition. The decrease rate of the loss factor of the non-Newtonian fluid electrolyte composition is more than 10%, thereby increasing the storage modulus significantly, and in turn, effectively improving the safety against accidents such as nail penetration and the impact resistance of the battery.

In any embodiment, the non-Newtonian fluid electrolyte composition includes: an organic solvent or an ionic liquid; an electrolyte salt; and suspended particles.

Excellent safety and impact resistance are exhibited by the non-Newtonian fluid electrolyte composition containing an electrolyte salt, an ionic liquid, and suspended particles or the non-Newtonian fluid electrolyte composition containing an electrolyte salt, an organic solvent, and suspended particles. Moreover, the non-Newtonian fluid electrolyte composition can achieve the minimum ohmic resistance and interface resistance of the electrolyte under a relatively low stacking pressure, thereby making the battery assembling process simpler.

In any embodiment, the non-Newtonian fluid electrolyte composition further includes a polymer.

The polyethylene oxide introduced in the non-Newtonian fluid electrolyte composition improves the cycle performance of the battery, reduces the expansion rate of the battery, reduces the gas production rate, and improves the safety of the battery.

In any embodiment, the electrolyte salt includes a sodium salt. The sodium salt includes one or more of sodium chloride, sodium bromide, sodium nitrate, sodium perchlorate, sodium hexafluorophosphate, sodium acetate, sodium trifluoroacetate, sodium trifluoromethanesulfonate, sodium bis(fluorosulfonyl)imide, or sodium bis(trifluoromethanesulfonyl)imide, and optionally includes one or more of sodium trifluoromethanesulfonate, sodium bis(fluorosulfonyl)imide, or sodium bis(trifluoromethanesulfonyl)imide.

The sodium salt improves the safety and impact resistance of the non-Newtonian fluid electrolyte composition, improves the cycle performance of the battery, reduces the gas production rate of the battery, reduces the stacking pressure required for achieving the minimum ohmic resistance and interface resistance of the electrolyte, improves the safety of the battery, and improves the assembling process of the battery. Controlling the sodium salt to optionally include one or more of sodium trifluoromethanesulfonate, sodium bis(fluorosulfonyl)imide, or sodium bis(trifluoromethanesulfonyl)imide further improves the cycle performance of the battery.

In any embodiment, the organic solvent includes one or more of an ether organic solvent, an ester organic solvent, or a sulfur-containing organic solvent. The organic solvent includes one or more of monoglyme, diglyme, triglyme, tetraglyme, ethylene carbonate, propylene carbonate, butylene carbonate, vinylene carbonate, fluoroethylene carbonate, ethyl methyl carbonate, dimethyl carbonate, diethyl carbonate, dipropyl carbonate, or dimethyl sulfoxide, and optionally includes monoglyme.

The above organic solvents improve the safety and impact resistance of the non-Newtonian fluid electrolyte composition, reduce the stacking pressure required for achieving the minimum ohmic resistance and interface resistance of the electrolyte, and improve the assembling process of the battery. Controlling the organic solvent to optionally include monoglyme further improves the safety and impact resistance of the non-Newtonian fluid electrolyte composition, more effectively improves the cycle performance of the battery, significantly reduces the gas production rate of the battery, and improves the safety of the battery.

In any embodiment, the ionic liquid includes one or more of 1-butyl-3-methylimidazole chloride, 1-alkyl-3-methylimidazole tetrafluoroborate, N-alkyl-N-methylpiperidine bis(trifluoromethanesulfonyl)imide, 5-azoniaspiro[4,4]nonane hexafluorophosphate, trihexyl(tetradecyl)phosphine bis(trifluoromethanesulfonyl)amide, or tetrabutylphosphine hexafluorophosphate, and optionally includes one or more of N-alkyl-N-methylpiperidine bis(trifluoromethanesulfonyl)imide or trihexyl(tetradecyl)phosphine bis(trifluoromethanesulfonyl)amide.

The ionic liquid improves the safety and impact resistance of the non-Newtonian fluid electrolyte composition, reduces the stacking pressure required for the battery to achieve the minimum ohmic resistance and interface resistance of the electrolyte, and improves the assembling process of the battery. Controlling the ionic liquid to optionally include one or more of N-alkyl-N-methylpiperidine bis(trifluoromethanesulfonyl)imide or trihexyl(tetradecyl)phosphine bis(trifluoromethanesulfonyl)amide further improves the safety and impact resistance of the non-Newtonian fluid electrolyte composition, more effectively improves the cycle performance of the battery, significantly reduces the gas production rate of the battery, significantly reduces the stacking pressure required for achieving the minimum ohmic resistance and interface resistance of the electrolyte, improves the safety of the battery, and improves the assembling process of the battery.

In any embodiment, the polymer includes one or more of polyethylene oxide, polyethylene glycol, polyvinylpyrrolidone, polymethyl methacrylate, polyvinylidene difluoride, polyvinyl alcohol, or polyacrylamide, and optionally includes one or more of polyethylene oxide or polyethylene glycol.

The polymer improves the safety and impact resistance of the non-Newtonian fluid electrolyte composition, reduces the gas production rate of the battery, reduces the stacking pressure required for achieving the minimum ohmic resistance and interface resistance of the electrolyte, improves the safety of the battery, and improves the assembling process of the battery. Controlling the polymer to optionally include one or more of polyethylene oxide or polyethylene glycol further improves the cycle performance of the battery, significantly reduces the stacking pressure required for the battery to achieve the minimum ohmic resistance and interface resistance of the electrolyte, and improves the assembling process of the battery.

In any embodiment, the suspended particles include one or more of gaseous silica, aluminum oxide, sodium oxide, lithium oxide, sodium fluoride, lithium fluoride, or polyurethane, and optionally include one or more of gaseous silica, sodium oxide, or lithium oxide.

The suspended particles improve the safety and impact resistance of the non-Newtonian fluid electrolyte composition, reduce the stacking pressure required for the battery to achieve the minimum ohmic resistance and interface resistance of the electrolyte, and improve the assembling process of the battery. Controlling the suspended particles to optionally include one or more of gaseous silica, sodium oxide, or lithium oxide further improves the cycle performance of the battery, significantly reduces the gas production rate of the battery, and improves the safety of the battery.

In any embodiment, the electrolyte salt includes one or more of sodium trifluoromethanesulfonate, sodium bis(fluorosulfonyl)imide, or sodium bis(trifluoromethanesulfonyl)imide; the organic solvent includes monoglyme; the ionic liquid includes one or more of N-alkyl-N-methylpiperidine bis(trifluoromethanesulfonyl)imide or trihexyl(tetradecyl)phosphine bis(trifluoromethanesulfonyl)amide; the polymer includes one or more of polyethylene oxide or polyethylene glycol; and the suspended particles include one or more of gaseous silica, sodium oxide, or lithium oxide.

The electrolyte salt, organic solvent, ionic liquid, polymer, and suspended particles selected above improve the cycle performance of the battery.

In any embodiment, the electrolyte salt includes one or more of sodium trifluoromethanesulfonate, sodium bis(fluorosulfonyl)imide, or sodium bis(trifluoromethanesulfonyl)imide; the organic solvent includes monoglyme; and the suspended particles include one or more of gaseous silica, sodium oxide, or lithium oxide.

The non-Newtonian fluid electrolyte composition containing the electrolyte salt, organic solvent, and suspended particles improves the safety and impact resistance of the non-Newtonian fluid electrolyte composition, improves the cycle performance of the battery, reduces the gas production rate of the battery, reduces the stacking pressure required for achieving the minimum ohmic resistance and interface resistance of the electrolyte, improves the safety of the battery, and improves the assembling process of the battery.

In any embodiment, the electrolyte salt includes one or more of sodium trifluoromethanesulfonate, sodium bis(fluorosulfonyl)imide, or sodium bis(trifluoromethanesulfonyl)imide; the organic solvent includes monoglyme; the polymer includes one or more of polyethylene oxide or polyethylene glycol; and the suspended particles include one or more of gaseous silica, sodium oxide, or lithium oxide.

The non-Newtonian fluid electrolyte composition containing the electrolyte salt, organic solvent, polymer, and suspended particles improves the safety and impact resistance of the non-Newtonian fluid electrolyte composition, improves the cycle performance of the battery, reduces the gas production rate of the battery, reduces the stacking pressure required for achieving the minimum ohmic resistance and interface resistance of the electrolyte, improves the safety of the battery, and improves the assembling process of the battery.

In any embodiment, the electrolyte salt includes one or more of sodium trifluoromethanesulfonate, sodium bis(fluorosulfonyl)imide, or sodium bis(trifluoromethanesulfonyl)imide; the ionic liquid includes one or more of N-alkyl-N-methylpiperidine bis(trifluoromethanesulfonyl)imide or trihexyl(tetradecyl)phosphine bis(trifluoromethanesulfonyl)amide; and the suspended particles include one or more of gaseous silica, sodium oxide, or lithium oxide.

The non-Newtonian fluid electrolyte composition containing the electrolyte salt, ionic liquid, and suspended particles improves the safety and impact resistance of the non-Newtonian fluid electrolyte composition, reduces the stacking pressure required for the battery to achieve the minimum ohmic resistance and interface resistance of the electrolyte, and improves the assembling process of the battery.

In any embodiment, the electrolyte salt includes one or more of sodium trifluoromethanesulfonate, sodium bis(fluorosulfonyl)imide, or sodium bis(trifluoromethanesulfonyl)imide; the ionic liquid includes one or more of N-alkyl-N-methylpiperidine bis(trifluoromethanesulfonyl)imide or trihexyl(tetradecyl)phosphine bis(trifluoromethanesulfonyl)amide; the polymer includes one or more of polyethylene oxide or polyethylene glycol; and the suspended particles include one or more of gaseous silica, sodium oxide, or lithium oxide.

The non-Newtonian fluid electrolyte composition containing the electrolyte salt, ionic liquid, polymer, and suspended particles improves the safety and impact resistance of the non-Newtonian fluid electrolyte composition, reduces the stacking pressure required for the battery to achieve the minimum ohmic resistance and interface resistance of the electrolyte, and improves the assembling process of the battery.

In any embodiment, based on a total mass of the non-Newtonian fluid electrolyte composition, a mass percent of the electrolyte salt is 5% to 20%, a mass percent of the organic solvent is 20% to 60%, a mass percent of the ionic liquid is 20% to 60%, a mass percent of the polymer is 0% to 40%, and a mass percent of the suspended particles is greater than 0 and less than or equal to 20%.

Controlling the mass percentages of the electrolyte salt, organic solvent, ionic liquid, polymer, and suspended particles to fall within the appropriate ranges improves the safety and impact resistance of the non-Newtonian fluid electrolyte composition, improves the cycle performance of the battery, reduces the gas production rate of the battery, reduces the stacking pressure required for achieving the minimum ohmic resistance and interface resistance of the electrolyte, improves the safety of the battery, and improves the assembling process of the battery, thereby ensuring sufficient diffusion of metal ions while enhancing the interface stability.

In any embodiment, the compression strength of the non-Newtonian fluid electrolyte composition is 35 kN to 200 kN.

The appropriate compression strength of the non-Newtonian fluid electrolyte composition enhances the impact resistance of the electrolyte composition.

A second aspect of this application provides a secondary battery. The secondary battery includes a positive electrode plate and the non-Newtonian fluid electrolyte composition disclosed in any one of the foregoing embodiments.

The secondary battery achieves superior cycle performance.

In any embodiment, the secondary battery includes at least one of a lithium battery or a sodium battery.

In any embodiment, the secondary battery is an anode-free sodium battery. The anode-free sodium battery possesses a high energy density.

In any embodiment, the positive electrode plate includes a positive active material. The positive active material includes at least one of a layered transition metal oxide, a polyanionic compound, or a Prussian blue compound, including one or more of NaNi_{1/3}Fe_{1/3}Mn_{1/3}O₂, Na(Cu_{1/9}Ni_{2/9}Fe_{1/3}Mn_{1/3})O₂, Na_{2/3}Ni_{1/6}Mn_{2/3}Ci_{1/9}Mg_{1/18}O₂, Na₄Fe₃(PO₄)₂P₂O₇, NaFePO₄, Na₃V₂(PO₄)₃, Na_{1.9}CoFe(CN)₆, Na₂NiFe(CN)₆, or NaMnFe(CN)₆.

All of the above positive active materials endow the battery with excellent cycle performance and safety.

In any embodiment, a surface of a positive active material is coated with a coating layer. The coating layer includes one or more of a carbon material, ZrO₂, TiO₂, polyaniline, polypyrrole, poly(3,4-ethylenedioxythiophene), aluminum oxide, zinc oxide, titanium oxide, zirconium oxide, magnesium oxide, silicon oxide, lanthanum oxide, sodium fluoride, lithium fluoride, or aluminum fluoride; and the carbon material includes one or more of amorphous carbon, graphite, or graphene.

The coating layer on the surface of the positive active material can more favorably improve the cycle performance, significantly reduce the gas production rate of the battery, and improve the safety of the battery.

A third aspect of this application provides a battery module. The battery module includes the secondary battery according to the second aspect of this application.

A fourth aspect of this application provides a battery pack. The battery pack includes the secondary battery according to the second aspect of this application or the battery module according to the third aspect of this application.

A fifth aspect of this application provides an electrical device. The electrical device includes at least one of the secondary battery according to the second aspect of this application, the battery module according to the third aspect of this application, or the battery pack according to the fourth aspect of this application.

### BRIEF DESCRIPTION OF DRAWINGS

FIG. 1 is a schematic diagram of a secondary battery according to an embodiment of this application;
FIG. 2 is an exploded view of the secondary battery shown in FIG. 1 according to an embodiment of this application; and
FIG. 3 is a schematic diagram of a battery module according to an embodiment of this application;
FIG. 4 is a schematic diagram of a battery pack according to an embodiment of this application;
FIG. 5 is an exploded view of the battery pack shown in FIG. 4 according to an embodiment of this application;
FIG. 6 is a schematic diagram of an electrical device that uses a secondary battery as a power supply according to an embodiment of this application.

List of reference numerals:
1. battery pack; 2. upper box; 3. lower box; 4. battery module; 5. secondary battery; 51. housing; 52. electrode assembly; 53. cover plate.

### DETAILED DESCRIPTION OF EMBODIMENTS

The following describes and discloses in detail embodiments of an electrolyte composition, a secondary battery, a battery module, a battery pack, and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified, the term "or" used herein is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

Currently, many problems lie in the liquid electrolyte and the all-solid electrolyte. A quasi-solid electrolyte possesses the advantages of both a liquid electrolyte and an all-solid electrolyte and has attracted the attention of researchers because the quasi-solid electrolyte not only contains liquid constituents but also assumes a specified geometric shape and strength. The mechanical property is a key factor to maintain the structural stability of the electrolyte during charge-discharge cycling. Therefore, an electrolyte with both an excellent mechanical property and the advantages of a quasi-solid electrolyte needs to be developed to meet the requirements of a new generation of electrochemical system in use.

### [Electrolyte composition]

In view of the above situation, this application discloses an electrolyte composition. The electrolyte composition is a non-Newtonian fluid electrolyte composition.

As used herein, a non-Newtonian fluid is a fluid with rheological properties incompliant with the Newtonian viscosity law specifying that the shear stress is not in a linear relationship with the shear rate of the fluid.

The non-Newtonian fluid electrolyte composition exhibits a thixotropic behavior in response to an applied external force, thereby transitioning from a flowable state to a solid state, and in turn, effectively improving the safety against short-circuiting and the impact resistance of the battery. Moreover, compared with other electrolytes of a relatively high viscosity, the non-Newtonian fluid electrolyte composition can achieve the minimum ohmic resistance and interface resistance of the electrolyte under a relatively low stacking pressure, thereby improving the assembling process of the battery.

In some embodiments, a viscosity of the electrolyte composition is 1000 mPa·s to 50000 mPa·s after the electrolyte composition is rotary-stirred at 25 °C for 10 seconds at a speed of 12 rpm by using a 62# or 64# rotor of a Dveslvtjo rotary viscometer.

In some embodiments, after the electrolyte composition is rotary-stirred at 25 °C for 10 seconds at a speed of 12 rpm by using a 62# or 64# rotor of a Dveslvtjo rotary viscometer, the upper limit or lower limit of the viscosity of the electrolyte composition is any one of 1000 mPa·s, 2000 mPa·s, 3000 mPa·s, 4000 mPa·s, 5000 mPa·s, 6000 mPa·s, 7000 mPa·s, 8000 mPa·s, 9000 mPa·s, 10000 mPa·s, 12000 mPa·s, 14000 mPa·s, 16000 mPa·s, 18000 mPa·s, 20000 mPa·s, 25000 mPa·s, 30000 mPa·s, 35000 mPa·s, 40000 mPa·s, 45000 mPa·s, or 50000 mPa·s.

In this application, the viscosity of the non-Newtonian fluid electrolyte composition is tested by using a BROOKFIELD Dveslvtjo rotary viscometer. The test is performed at a temperature of 25 °C for a duration of 10 seconds. To measure the viscosity not lower than 2000 mPa·s, a 64# rotor is applied; to measure the viscosity lower than 2000 mPa·s, a 62# rotor is applied. The rotation speed of the rotor is 12 rpm. The viscosity is measured for three times in parallel and the measured values are averaged out. In comparison with a battery containing a liquid electrolyte of similar constituents, the non-Newtonian fluid electrolyte composition can effectively suppress gas production in the battery by virtue of the high viscosity, thereby improving the cycle performance of the battery.

In some embodiments, the viscosity of the electrolyte composition increases by more than 100 mPa·s after the electrolyte composition is rotary-stirred at 25 °C for 10 minutes at a speed of 12 rpm by using a 62# or 64# rotor of a Dveslvtjo rotary viscometer in comparison with the viscosity of the electrolyte composition tested under the same conditions for 10 seconds.

In some embodiments, in comparison with the viscosity of the electrolyte composition tested under the same conditions for 10 seconds, after the electrolyte composition is rotary-stirred at 25 °C for 10 minutes at a speed of 12 rpm by using a 62# or 64# rotor of a Dveslvtjo rotary viscometer, the viscosity of the electrolyte composition increases by optionally 100 mPa·s, 300 mPa·s, 500 mPa·s, 700 mPa·s, 900 mPa·s, 1000 mPa·s, 1200 mPa·s, 1400 mPa·s, 1600 mPa·s, 1800 mPa·s, 2000 mPa·s, 2200 mPa·s, 2400 mPa·s, 2600 mPa·s, 2800 mPa·s, or 3000 mPa·s.

The non-Newtonian fluid electrolyte composition does not comply with the Newtonian viscosity law specifying that the shear stress is in a nonlinear relationship with the shear strain rate. The non-Newtonian fluid electrolyte composition in this application is a shear thickening liquid with a viscosity increasing with the increase of the shear rate or shear time.

In some embodiments, a post-thixotropic loss factor of the non-Newtonian fluid electrolyte composition is lower than a pre-thixotropic loss factor by more than 10% as a decrease rate.

As used herein, thixotropy means a property exhibited by the electrolyte composition to transition from a flowable state to a solid state in response to an applied external force.

In some embodiments, the thixotropy of the electrolyte composition is implemented by nail penetration. As an example, a battery containing an electrolyte composition is penetrated by a nail by using a GoTech tensile machine and a nail penetration jig. A ø1 mm nail of a nail penetration tester penetrates the battery for a depth of 2 mm at a speed of 6 mm/min. In some embodiments, the thixotropy of the electrolyte composition is implemented by squeezing. An exemplary implementation method is to squeeze a battery by use of a semi-cylindrical squeezing plate with a radius of 75 mm in a direction perpendicular to the electrode plate of the battery at a squeezing speed of 60 mm/min.

As used herein, the term "loss factor" means a ratio of the loss modulus to the storage modulus.

As used herein, the loss factor of the non-Newtonian fluid electrolyte composition may be determined by a method known in the art. An exemplary test process is as follows: Cutting out the electrolyte composition into disc-shaped specimens of a 20 mm diameter and a 1 mm thickness; testing the specimen by using a HAAKE rheometer at a test temperature of 25 °C within a strain scanning range of 0.1% to 1000% and at a fixed frequency of 1 Hz to obtain a storage modulus (G') and a loss modulus (G"); and calculating the loss factor (*tan* δ) as: *tan* δ = G"/G'.

As used herein, the term "decrease rate" is calculated as: decrease rate = (pre-thixotropic loss factor - post-thixotropic loss factor)/pre-thixotropic loss factor.

In some embodiments, the post-thixotropic loss factor of the non-Newtonian fluid electrolyte composition decreases from the pre-thixotropic loss factor at a decrease rate of optionally 10%, 15%, 20%, 25%, 30%, 35%, 40%, 45%, 50%, 60%, 65%, 70%, or 75%.

Impacted by an external force such as nail penetration or squeezing, the non-Newtonian fluid electrolyte composition transitions from a flowable state to a solid state. The transition of the phase state results in a decrease in the loss factor of the electrolyte composition. The decrease rate of the loss factor of the non-Newtonian fluid electrolyte composition is more than 10%, thereby increasing the storage modulus significantly, and in turn, effectively improving the safety against accidents such as nail penetration and the impact resistance of the battery.

In some embodiments, the non-Newtonian fluid electrolyte composition includes: at least one of an organic solvent or an ionic liquid; an electrolyte salt; and suspended particles.

As used herein, the term "organic solvent" means an organic compound containing a carbon atom, and the organic compound is dielectric and can dissolve an electrolyte salt.

As used herein, the term "ionic liquid" means a liquid formed of ions, and the ionic liquid is not dielectric, but can dissociate an electrolyte salt.

As used herein, the term "electrolyte salt" means a compound formed by combining a metal ion with an acid ion, and the electrolyte salt is electrically conductive when dissolved in an aqueous solution or in a molten state.

As used herein, the term "suspended particles" mean particles uniformly dispersed in a non-Newtonian electrolyte composition system. Suspended particles include, but are not limited to, one or more of organic particles and inorganic particles.

In some embodiments, the non-Newtonian fluid electrolyte composition includes: an organic solvent, an electrolyte salt, and suspended particles.

In some embodiments, the non-Newtonian fluid electrolyte composition includes: an ionic liquid, an electrolyte salt, and suspended particles.

Excellent safety and impact resistance are exhibited by the non-Newtonian fluid electrolyte composition containing an electrolyte salt, an ionic liquid, and suspended particles or the non-Newtonian fluid electrolyte composition containing an electrolyte salt, an organic solvent, and suspended particles. Moreover, the non-Newtonian fluid electrolyte composition can achieve the minimum ohmic resistance and interface resistance of the electrolyte under a relatively low stacking pressure, thereby making the battery assembling process simpler.

In some embodiments, the non-Newtonian fluid electrolyte composition further includes a polymer.

In some embodiments, the non-Newtonian fluid electrolyte composition includes: an organic solvent, an electrolyte salt, a polymer, and suspended particles.

In some embodiments, the non-Newtonian fluid electrolyte composition includes: an ionic liquid, an electrolyte salt, a polymer, and suspended particles.

The polyethylene oxide introduced in the non-Newtonian fluid electrolyte composition improves the cycle performance of the battery, reduces the expansion rate of the battery, reduces the gas production rate, and improves the safety of the battery.

In some embodiments, the electrolyte salt includes a sodium salt. The sodium salt includes one or more of sodium chloride, sodium bromide, sodium nitrate, sodium perchlorate, sodium hexafluorophosphate, sodium acetate, sodium trifluoroacetate, sodium trifluoromethanesulfonate, sodium bis(fluorosulfonyl)imide, or sodium bis(trifluoromethanesulfonyl)imide, and optionally includes one or more of sodium trifluoromethanesulfonate, sodium bis(fluorosulfonyl)imide, or sodium bis(trifluoromethanesulfonyl)imide.

In some embodiments, the sodium salt includes sodium chloride. In some embodiments, the sodium salt includes sodium bromide. In some embodiments, the sodium salt includes sodium hexafluorophosphate. In some embodiments, the sodium salt includes sodium tetrafluoroborate. In some embodiments, the sodium salt includes sodium trifluoromethanesulfonate. In some embodiments, the sodium salt includes sodium bis(fluorosulfonyl)imide. In some embodiments, the sodium salt includes sodium bis(fluorosulfonyl)imide and sodium bis(trifluoromethanesulfonyl)imide. In some embodiments, the sodium salt includes sodium tetrafluoroborate and sodium bis(fluorosulfonyl)imide.

The sodium salt improves the safety and impact resistance of the non-Newtonian fluid electrolyte composition, improves the cycle performance of the battery, reduces the gas production rate of the battery, reduces the stacking pressure required for achieving the minimum ohmic resistance and interface resistance of the electrolyte, improves the safety of the battery, and improves the assembling process of the battery. Controlling the sodium salt to optionally include one or more of sodium trifluoromethanesulfonate, sodium bis(fluorosulfonyl)imide, or sodium bis(trifluoromethanesulfonyl)imide further improves the cycle performance of the battery.

In some embodiments, the organic solvent includes one or more of an ether organic solvent, an ester organic solvent, or a sulfur-containing organic solvent. The organic solvent includes one or more of monoglyme, diglyme, triglyme, tetraglyme, ethylene carbonate, propylene carbonate, butylene carbonate, vinylene carbonate, fluoroethylene carbonate, ethyl methyl carbonate, dimethyl carbonate, diethyl carbonate, dipropyl carbonate, or dimethyl sulfoxide, and optionally includes monoglyme.

In some embodiments, the organic solvent includes monoglyme. In some embodiments, the organic solvent includes diglyme. In some embodiments, the organic solvent includes triglyme. In some embodiments, the organic solvent includes tetraglyme. In some embodiments, the solvent includes ethylene carbonate. In some embodiments, the organic solvent includes monoglyme and ethylene carbonate. In some embodiments, the organic solvent includes diglyme and diglyme.

The above organic solvents improve the safety and impact resistance of the non-Newtonian fluid electrolyte composition, reduce the stacking pressure required for achieving the minimum ohmic resistance and interface resistance of the electrolyte, and improve the assembling process of the battery. Controlling the organic solvent to optionally include monoglyme further improves the safety and impact resistance of the non-Newtonian fluid electrolyte composition, more effectively improves the cycle performance of the battery, significantly reduces the gas production rate of the battery, and improves the safety of the battery.

In some embodiments, the ionic liquid includes one or more of 1-butyl-3-methylimidazole chloride, 1-alkyl-3-methylimidazole tetrafluoroborate, N-alkyl-N-methylpiperidine bis(trifluoromethanesulfonyl)imide, 5-azoniaspiro[4,4]nonane hexafluorophosphate, trihexyl(tetradecyl)phosphine bis(trifluoromethanesulfonyl)amide, or tetrabutylphosphine hexafluorophosphate, and optionally includes one or more of N-alkyl-N-methylpiperidine bis(trifluoromethanesulfonyl)imide or trihexyl(tetradecyl)phosphine bis(trifluoromethanesulfonyl)amide.

In some embodiments, the ionic liquid includes 1-butyl-3-methylimidazole chloride. In some embodiments, the ionic liquid includes 1-alkyl-3-methylimidazole tetrafluoroborate. In some embodiments, the ionic liquid includes N-alkyl-N-methylpiperidine bis(trifluoromethanesulfonyl)imide. In some embodiments, the ionic liquid includes trihexyl(tetradecyl)phosphine bis(trifluoromethanesulfonyl)amide. In some embodiments, the ionic liquid includes tetrabutylphosphine hexafluorophosphate. In some embodiments, the ionic liquid includes 1-butyl-3-methylimidazole chloride and tetrabutylphosphine hexafluorophosphate. In some embodiments, the ionic liquid includes N-alkyl-N-methylpiperidine bis(trifluoromethanesulfonyl)imide and trihexyl(tetradecyl)phosphine bis(trifluoromethanesulfonyl)amide.

The ionic liquid improves the safety and impact resistance of the non-Newtonian fluid electrolyte composition, reduces the stacking pressure required for the battery to achieve the minimum ohmic resistance and interface resistance of the electrolyte, and improves the assembling process of the battery. Controlling the ionic liquid to optionally include one or more of N-alkyl-N-methylpiperidine bis(trifluoromethanesulfonyl)imide or trihexyl(tetradecyl)phosphine bis(trifluoromethanesulfonyl)amide further improves the safety and impact resistance of the non-Newtonian fluid electrolyte composition, more effectively improves the cycle performance of the battery, significantly reduces the gas production rate of the battery, significantly reduces the stacking pressure required for achieving the minimum ohmic resistance and interface resistance of the electrolyte, improves the safety of the battery, and improves the assembling process of the battery.

In some embodiments, the polymer includes one or more of polyethylene oxide, polyethylene glycol, polyvinylpyrrolidone, polymethyl methacrylate, polyvinylidene difluoride, polyvinyl alcohol, or polyacrylamide, and optionally includes one or more of polyethylene oxide or polyethylene glycol.

In some embodiments, the polymer includes polyethylene oxide. In some embodiments, the polymer includes polyethylene glycol. In some embodiments, the polymer includes polyvinylpyrrolidone. In some embodiments, the polymer includes polymethyl methacrylate. In some embodiments, the polymer includes polyvinylidene difluoride. In some embodiments, the polymer includes polyvinylidene difluoride and polyethylene oxide. In some embodiments, the polymer includes polyethylene glycol and polyethylene oxide.

The polymer improves the safety and impact resistance of the non-Newtonian fluid electrolyte composition, reduces the gas production rate of the battery, reduces the stacking pressure required for achieving the minimum ohmic resistance and interface resistance of the electrolyte, improves the safety of the battery, and improves the assembling process of the battery. Controlling the polymer to optionally include one or more of polyethylene oxide or polyethylene glycol further improves the cycle performance of the battery, significantly reduces the stacking pressure required for the battery to achieve the minimum ohmic resistance and interface resistance of the electrolyte, and improves the assembling process of the battery.

In some embodiments, the suspended particles include one or more of gaseous silica, aluminum oxide, sodium oxide, lithium oxide, sodium fluoride, lithium fluoride, or polyurethane, and optionally include one or more of gaseous silica, sodium oxide, or lithium oxide.

In some embodiments, the suspended particles include gaseous silica. In some embodiments, the suspended particles include aluminum oxide. In some embodiments, the suspended particles include sodium oxide. In some embodiments, the suspended particles include sodium fluoride. In some embodiments, the suspended particles include polyurethane. The suspended particles include gaseous silica and sodium oxide. The suspended particles include gaseous silica and lithium fluoride. The suspended particles include sodium oxide and lithium fluoride. The suspended particles include gaseous silica and polyurethane.

The suspended particles improve the safety and impact resistance of the non-Newtonian fluid electrolyte composition, reduce the stacking pressure required for the battery to achieve the minimum ohmic resistance and interface resistance of the electrolyte, and improve the assembling process of the battery. Controlling the suspended particles to optionally include one or more of gaseous silica, sodium oxide, or lithium oxide further improves the cycle performance of the battery, significantly reduces the gas production rate of the battery, and improves the safety of the battery.

In some embodiments, the electrolyte salt includes one or more of sodium trifluoromethanesulfonate, sodium bis(fluorosulfonyl)imide, or sodium bis(trifluoromethanesulfonyl)imide; the organic solvent includes monoglyme; the ionic liquid includes one or more of N-alkyl-N-methylpiperidine bis(trifluoromethanesulfonyl)imide or trihexyl(tetradecyl)phosphine bis(trifluoromethanesulfonyl)amide; the polymer includes one or more of polyethylene oxide or polyethylene glycol; and the suspended particles include one or more of gaseous silica, sodium oxide, or lithium oxide.

In some embodiments, the electrolyte salt includes sodium trifluoromethanesulfonate, the organic solvent includes monoglyme, the polymer includes polyethylene oxide, and the suspended particles include gaseous silica. In some embodiments, the electrolyte salt includes sodium bis(fluorosulfonyl)imide, the ionic liquid includes N-alkyl-N-methylpiperidine bis(trifluoromethanesulfonyl)imide, the polymer includes polyethylene oxide, and the suspended particles include gaseous silica.

The electrolyte salt, organic solvent, ionic liquid, polymer, and suspended particles selected above improve the cycle performance of the battery.

In some embodiments, the electrolyte salt includes one or more of sodium trifluoromethanesulfonate, sodium bis(fluorosulfonyl)imide, or sodium bis(trifluoromethanesulfonyl)imide; the organic solvent includes monoglyme; and the suspended particles include one or more of gaseous silica, sodium oxide, or lithium oxide.

In some embodiments, the electrolyte salt includes sodium trifluoromethanesulfonate, the organic solvent includes monoglyme, and the suspended particles include gaseous silica. In some embodiments, the electrolyte salt includes sodium bis(fluorosulfonyl)imide, the organic solvent includes monoglyme, and the suspended particles include lithium oxide. In some embodiments, the electrolyte salt includes sodium bis(trifluoromethanesulfonyl)imide, the organic solvent includes monoglyme, and the suspended particles include gaseous silica.

The non-Newtonian fluid electrolyte composition containing the electrolyte salt, organic solvent, and suspended particles improves the safety and impact resistance of the non-Newtonian fluid electrolyte composition, improves the cycle performance of the battery, reduces the gas production rate of the battery, reduces the stacking pressure required for achieving the minimum ohmic resistance and interface resistance of the electrolyte, improves the safety of the battery, and improves the assembling process of the battery.

In some embodiments, the electrolyte salt includes one or more of sodium trifluoromethanesulfonate, sodium bis(fluorosulfonyl)imide, or sodium bis(trifluoromethanesulfonyl)imide; the organic solvent includes monoglyme; the polymer includes one or more of polyethylene oxide or polyethylene glycol; and the suspended particles include one or more of gaseous silica, sodium oxide, or lithium oxide.

In some embodiments, the electrolyte salt includes sodium trifluoromethanesulfonate, the organic solvent includes monoglyme, the polymer includes polyethylene oxide, and the suspended particles include gaseous silica. In some embodiments, the electrolyte salt includes sodium bis(fluorosulfonyl)imide, the organic solvent includes monoglyme, the polymer includes polyethylene glycol, and the suspended particles include lithium oxide. In some embodiments, the electrolyte salt includes sodium bis(trifluoromethanesulfonyl)imide, the organic solvent includes monoglyme, the polymer includes polyethylene oxide and polyethylene glycol, and the suspended particles include sodium oxide.

The non-Newtonian fluid electrolyte composition containing the electrolyte salt, organic solvent, polymer, and suspended particles improves the safety and impact resistance of the non-Newtonian fluid electrolyte composition, improves the cycle performance of the battery, reduces the gas production rate of the battery, reduces the stacking pressure required for achieving the minimum ohmic resistance and interface resistance of the electrolyte, improves the safety of the battery, and improves the assembling process of the battery.

In some embodiments, the electrolyte salt includes one or more of sodium trifluoromethanesulfonate, sodium bis(fluorosulfonyl)imide, or sodium bis(trifluoromethanesulfonyl)imide; the ionic liquid includes one or more of N-alkyl-N-methylpiperidine bis(trifluoromethanesulfonyl)imide or trihexyl(tetradecyl)phosphine bis(trifluoromethanesulfonyl)amide; and the suspended particles include one or more of gaseous silica, sodium oxide, or lithium oxide.

In some embodiments, the electrolyte salt includes sodium trifluoromethanesulfonate, the ionic liquid includes N-alkyl-N-methylpiperidine bis(trifluoromethanesulfonyl)imide, and the suspended particles include gaseous silica. In some embodiments, the electrolyte salt includes sodium bis(fluorosulfonyl)imide, the ionic liquid includes N-alkyl-N-methylpiperidine bis(trifluoromethanesulfonyl)imide, and the suspended particles include sodium oxide. In some embodiments, the electrolyte salt includes sodium bis(trifluoromethanesulfonyl)imide, the ionic liquid includes N-alkyl-N-methylpiperidine bis(trifluoromethanesulfonyl)imide and trihexyl(tetradecyl)phosphine bis(trifluoromethanesulfonyl)amide, and the suspended particles include lithium oxide.

The non-Newtonian fluid electrolyte composition containing the electrolyte salt, ionic liquid, and suspended particles improves the safety and impact resistance of the non-Newtonian fluid electrolyte composition, reduces the stacking pressure required for the battery to achieve the minimum ohmic resistance and interface resistance of the electrolyte, and improves the assembling process of the battery.

In some embodiments, the electrolyte salt includes one or more of sodium trifluoromethanesulfonate, sodium bis(fluorosulfonyl)imide, or sodium bis(trifluoromethanesulfonyl)imide; the ionic liquid includes one or more of N-alkyl-N-methylpiperidine bis(trifluoromethanesulfonyl)imide or trihexyl(tetradecyl)phosphine bis(trifluoromethanesulfonyl)amide; the polymer includes one or more of polyethylene oxide or polyethylene glycol; and the suspended particles include one or more of gaseous silica, sodium oxide, or lithium oxide.

In some embodiments, the electrolyte salt includes sodium trifluoromethanesulfonate, the ionic liquid includes N-alkyl-N-methylpiperidine bis(trifluoromethanesulfonyl)imide, the polymer includes polyethylene oxide, and the suspended particles include gaseous silica. In some embodiments, the electrolyte salt includes sodium bis(fluorosulfonyl)imide, the ionic liquid includes N-alkyl-N-methylpiperidine bis(trifluoromethanesulfonyl)imide, the polymer includes polyethylene oxide and polyethylene glycol, and the suspended particles include lithium oxide. In some embodiments, the electrolyte salt includes sodium bis(trifluoromethanesulfonyl)imide, the ionic liquid includes N-alkyl-N-methylpiperidine bis(trifluoromethanesulfonyl)imide and trihexyl(tetradecyl)phosphine bis(trifluoromethanesulfonyl)amide, the polymer includes polyethylene glycol, and the suspended particles include gaseous silica and lithium oxide.

The non-Newtonian fluid electrolyte composition containing the electrolyte salt, ionic liquid, polymer, and suspended particles improves the safety and impact resistance of the non-Newtonian fluid electrolyte composition, reduces the stacking pressure required for the battery to achieve the minimum ohmic resistance and interface resistance of the electrolyte, and improves the assembling process of the battery.

In some embodiments, based on a total mass of the non-Newtonian fluid electrolyte composition, a mass percent of the electrolyte salt is 5% to 20%, a mass percent of the organic solvent is 20% to 60%, a mass percent of the ionic liquid is 20% to 60%, a mass percent of the polymer is 0% to 40%, and a mass percent of the suspended particles is greater than 0 and less than or equal to 20%.

In some embodiments, based on the total mass of the non-Newtonian fluid electrolyte composition, the mass percent of the electrolyte salt is optionally 5%, 6%, 8%, 10%, 12%, 14%, 15%, 16%, 18%, or 20%; the mass percent of the organic solvent is optionally 20%, 22%, 25%, 30%, 35%, 38%, 40%, 45%, 47%, 50%, 53%, 55%, 60%, 62%, or 65%; the mass percent of the ionic liquid is optionally 20%, 22%, 25%, 30%, 35%, 38%, 40%, 45%, 47%, 50%, 53%, 55%, 60%, 62%, or 65%; the mass percent of the polymer is optionally 0%, 5%, 6%, 8%, 10%, 12%, 14%, 15%, 16%, 18%, 20%, 22%, 25%, 28%, 30%, 35%, 38%, or 40%; and the mass percent of the suspended particles is optionally 1%, 2%, 4%, 5%, 6%, 8%, 10%, 12%, 14%, 15%, 16%, 18%, or 20%.

Controlling the mass percentages of the electrolyte salt, organic solvent, ionic liquid, polymer, and suspended particles to fall within the appropriate ranges improves the safety and impact resistance of the non-Newtonian fluid electrolyte composition, improves the cycle performance of the battery, reduces the gas production rate of the battery, reduces the stacking pressure required for achieving the minimum ohmic resistance and interface resistance of the electrolyte, improves the safety of the battery, and improves the assembling process of the battery, thereby ensuring sufficient diffusion of metal ions while enhancing the interface stability.

In some embodiments, the compression strength of the non-Newtonian fluid electrolyte composition is 35 kN to 200 kN.

As used herein, the compression strength measured when the open-circuit voltage drops to zero typically characterizes a pressure on the non-Newtonian fluid electrolyte composition to result in a short circuit of the battery, reflects the impact resistance of the non-Newtonian fluid electrolyte composition, and may be determined by any well-known test method. An exemplary test process is as follows: Using a semi-cylindrical squeezing plate with a radius of 75 mm to squeeze a battery in a direction perpendicular to the electrode plate of the battery at a squeezing speed of 60 mm/min; observing the changes of the open-circuit voltage of the battery and the pressure exerted by the squeezing plate; and recording the pressure exerted by the squeezing plate when the open-circuit voltage is zero.

The appropriate compression strength of the non-Newtonian fluid electrolyte composition enhances the impact resistance of the electrolyte composition, and improves the safety and reliability of the battery.

### [Positive electrode plate]

The positive electrode plate includes a positive current collector and a positive active material layer formed on at least a part of surfaces of the positive current collector. The positive active material layer includes a positive active material. The positive active material may include at least one of a layered transition metal oxide, a polyanionic compound, or a Prussian blue compound.

The transition metal in the layered transition metal oxide may be at least one of Mn, Fe, Ni, Co, Cr, Cu, Ti, Zn, V, Zr, or Ce. Optionally, the layered transition metal oxide is, for example, NaₓMO₂, where M is one or more of Ti, V, Mn, Co, Ni, Fe, Cr, or Cu, and 0 < x ≤ 1.

The polyanionic compound may be a type of compound containing a metal ion, a transition metal ion, and a tetrahedral (YO₄)ⁿ⁻ anion unit. The metal ion is optionally one of a sodium ion, a lithium ion, a potassium ion, or a zinc ion. The transition metal is optionally at least one of Mn, Fe, Ni, Co, Cr, Cu, Ti, Zn, V, Zr, or Ce. Y is optionally at least one of P, S, or Si; and n denotes a valence of (YO₄)ⁿ⁻.

The Prussian blue compound may be a compound containing a sodium ion, a transition metal ion, or a cyano ion (CN⁻). The transition metal may be at least one of Mn, Fe, Ni, Co, Cr, Cu, Ti, Zn, V, Zr, or Ce. For example, the Prussian blue compound is NaₐMe_{b}Me'_{c}(CN)₆, where Me and Me' each are independently at least one of Ni, Cu, Fe, Mn, Co, or Zn, 0 < a ≤ 2, 0 < b < 1, and 0 < c < 1.

In some embodiments, the positive electrode plate includes a positive active material. The positive active material includes at least one of a layered transition metal oxide, a polyanionic compound, or a Prussian blue compound, including one or more of NaNi_{1/3}Fe_{1/3}Mn_{1/3}O₂, Na(Cu_{1/9}Ni_{2/9}Fe_{1/3}Mn_{1/3})O₂, Na_{2/3}Ni_{1/6}Mn_{2/3}Cu_{1/9}Mg_{1/18}O₂, Na₄Fe₃(PO₄)₂P₂O₇, NaFePO₄, Na₃V₂(PO₄)₃, Na_{1.9}CoFe(CN)₆, Na₂NiFe(CN)₆, or NaMnFe(CN)₆.

All of the above positive active materials endow the battery with excellent cycle performance and safety.

In some embodiments, a surface of a positive active material is coated with a coating layer. The coating layer includes one or more of a carbon material, ZrO₂, TiO₂, polyaniline, polypyrrole, poly(3,4-ethylenedioxythiophene), aluminum oxide, zinc oxide, titanium oxide, zirconium oxide, magnesium oxide, silicon oxide, lanthanum oxide, sodium fluoride, lithium fluoride, or aluminum fluoride; and the carbon material includes one or more of amorphous carbon, graphite, or graphene.

As used herein, the term "amorphous carbon" means a carbon material graphitized and crystallized to a very low degree, approximating to an amorphous morphology, and assuming no specific shape or periodic structure pattern. As an example, amorphous carbon includes, but is not limited to, carbon black, charcoal, or coke.

As used herein, the term "graphite" means an allotrope of carbon, including natural graphite and artificial graphite.

As used herein, the term "graphene" means a carbon material formed by closely packing sp²-bonded carbon atoms into a monolayer two-dimensional honeycomb lattice structure. As an example, graphene includes, but is not limited to, monolayer graphene or multilayer graphene.

As used herein, the term "monolayer graphene" is a single-layer sheet structure formed by closely arranging carbon atoms periodically in a hexagonal honeycomb pattern. As an example, the thickness of the monolayer graphene is just 0.3 nm to 0.4 nm.

As used herein, the term "multilayer graphene" is prepared by stacking 2 to 10 layers of monolayer graphene, with a total thickness of less than 100 nm.

The coating layer on the surface of the positive active material can more favorably improve the cycle performance, significantly reduce the gas production rate of the battery, and improve the safety of the battery.

The positive active material layer may further include a conductive agent to improve the conductivity of the positive electrode. The conductive agent is optionally one or more of Super P, acetylene black, carbon black, Ketj en black, carbon dots, carbon nanotubes, graphite, graphene, or carbon nanofibers.

The positive active material layer may include a binder to firmly bind the positive active material and optionally the conductive agent onto the positive current collector. The binder is optionally at least one of polyvinylidene difluoride (PVDF), polytetrafluoroethylene (PTFE), polyacrylic acid (PAA), polyvinyl alcohol (PVA), poly(ethylene-co-vinyl acetate) (EVA), styrene-butadiene rubber (SBR), carboxymethylcellulose (CMC), sodium alginate (SA), polymethacrylic acid (PMA), or carboxymethyl chitosan (CMCS).

The positive current collector may be a conductive carbon sheet, metal foil, carbon-coated metal foil, a porous metal sheet, or a composite current collector. The conductive carbon material of the conductive carbon sheet is optionally one or more of Super P, carbon black, Ketjen black, carbon dots, carbon nanotubes, graphite, graphene, or carbon nanofibers. The metal materials of the metal foil, the carbon-coated metal foil, and the porous metal sheet each are at least one independently selected from copper, aluminum, nickel, or stainless steel. The composite current collector may be a composite current collector formed by compounding metal foil and a polymer base film.

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive electrode slurry, coating a positive current collector with the positive electrode slurry, and performing steps such as drying and cold pressing to obtain the positive electrode plate.

### [Negative electrode plate]

The negative electrode plate may include a negative current collector alone without a negative active material. A metal phase may be pre-deposited on the negative current collector of the negative electrode plate.

In some embodiments, the negative current collector may be metal foil or a composite current collector. For example, the metal foil may be an aluminum foil or copper foil. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the negative electrode plate includes a negative current collector and an undercoat disposed on at least one surface of the negative current collector. The undercoat includes one or more of carbon nanotubes, graphite, graphene, silver composite carbon nanoparticles, or tin composite carbon nanoparticles.

In some embodiments, an areal density of the undercoat is 2 to 50 g/m².

In some embodiments, a thickness of the undercoat is 1 µm to 100 µm.

### [Separator]

In some embodiments, the secondary battery further includes a separator. The type of the separator is not particularly limited in this application, and may be any well-known porous separator that is highly stable both chemically and mechanically.

In some embodiments, the material of the separator may be at least one selected from polyethylene, polypropylene, polyvinylidene fluoride, aramid fiber, polyethylene terephthalate, polytetrafluoroethylene, polyacrylonitrile, polyimide, polyamide, polyester, or natural fiber. The separator may be a single-layer film or a multilayer composite film, without being particularly limited. When the separator is a multilayer composite film, materials in different layers may be identical or different, without being particularly limited.

In some embodiments, the positive electrode plate, the negative electrode plate, and the separator may be made into an electrode assembly by winding or stacking.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

### [Secondary battery]

The secondary battery includes a positive electrode plate and the non-Newtonian fluid electrolyte composition disclosed in some embodiments hereof.

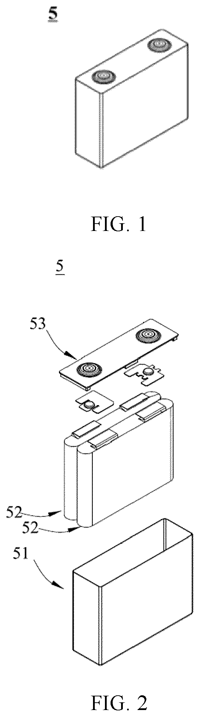

The shape of the secondary battery is not particularly limited in this application, and may be cylindrical, prismatic or any other shape. FIG. 2 shows a prismatic secondary battery 5 as an example.

In some embodiments, the secondary battery further includes a negative electrode plate and a separator.

In some embodiments, the secondary batteries include at least one of a lithium battery or a sodium battery.

In some embodiments, the secondary batteries include at least one of a potassium battery, a magnesium battery, or a zinc battery.

In some embodiments, the secondary battery is an anode-free sodium battery.

The anode-free sodium battery contains just a negative current collector, without pre-depositing a negative active material. During the initial charge, sodium ions gain electrons on a cathode side, and are deposited as metallic sodium on the surface of the current collector to form a sodium metal phase. During discharge, the metallic sodium can be converted into sodium ions and return to the positive electrode, thereby implementing charge-and-discharge cycles. Compared with a sodium-ion secondary battery and a sodium metal battery, the anode-free sodium battery can achieve a higher energy density due to no limitation by the negative electrode material. There is not enough sodium metal in an anode-free sodium battery to serve as a negative electrode material and provide enough sodium to the battery. Therefore, the non-Newtonian fluid electrolyte composition applied in the anode-free sodium battery can more effectively improve the cycle performance and safety performance of the secondary battery at normal/high temperatures.

In some embodiments, a CB value of the anode-free sodium battery is less than or equal to 0.1.

The CB value is a ratio of the capacity per unit area of the negative electrode plate to the capacity per unit area of the positive electrode plate in a secondary battery. The anode-free battery contains no negative active material. Therefore, the capacity per unit area of the negative electrode plate is relatively low, and the CB value of the secondary battery is less than or equal to 0.1.

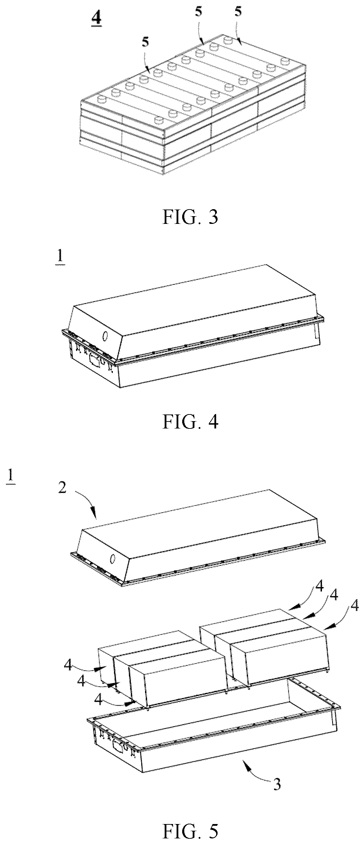

In some embodiments, referring to FIG. 3, the outer package may include a housing 51 and a cover plate 53. The housing 51 may include a bottom plate and a side plate connected to the bottom plate. The bottom plate and the side plate close in to form an accommodation cavity. An opening that communicates with the accommodation cavity is made on the housing 51. The cover plate 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The non-Newtonian fluid electrolyte composition infiltrates in the electrode assembly 52. The number of electrode assemblies 52 in a secondary battery 5 may be one or more, and may be selected by a person skilled in the art as actually required.

### [Battery module]

In some embodiments, the secondary battery may be assembled into a battery module. The battery module may include one or more secondary batteries, and the specific number of secondary batteries in a battery module may be selected by a person skilled in the art depending on practical applications and capacity of the battery module.

FIG. 4 shows a battery module 4 as an example. Referring to FIG. 4, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

### [Battery pack]

In some embodiments, the battery module may be assembled to form a battery pack. The battery pack may include one or more battery modules, and the specific number of battery modules in a battery pack may be selected by a person skilled in the art depending on practical applications and capacity of the battery pack.

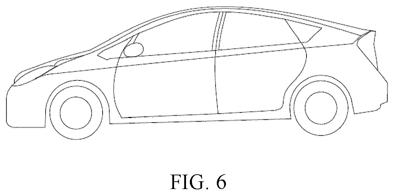

FIG. 5 and FIG. 6 show a battery pack 1 as an example. Referring to FIG. 5 and FIG. 6, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

### [Electrical device]

According to an embodiment of this application, an electrical device is provided. The electrical device includes at least one of the secondary battery disclosed in any embodiment described above, the battery module disclosed in any embodiment described above, or the battery pack disclosed in any embodiment described above.

The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

FIG. 7 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the device may be a mobile phone, a tablet computer, a notebook computer, or the like. The device is generally required to be thin and light, and may have a secondary battery as a power supply.

### Embodiments

The following describes some embodiments of this application. The embodiments described below are illustrative, and are merely intended to construe this application but not to limit this application. Unless techniques or conditions are otherwise expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

### I. Preparation methods

### Embodiment 1

### 1) Preparing a non-Newtonian fluid electrolyte composition

Mixing polyethylene oxide (PEO, with a weight-average molecular weight of 600000), gaseous silica, a sodium bis(fluorosulfonyl)imide (NaFSI), and N-alkyl-N-methylpiperidine bis(trifluoromethanesulfonyl)imide ionic liquid at a mass ratio of 5: 2: 3: 10 in a dry argon atmosphere, and stirring well to completely dissolve the NaFSI to obtain a non-Newtonian fluid electrolyte composition.

### 2) Preparing a positive electrode plate

Mixing a Na₄Fe₃(PO₄)₂P₂O₇ (NFPP) material, carbon black as a conductive agent, and polyvinylidene fluoride as a binder in an N-methyl-pyrrolidone (NMP) solvent at a mass ratio of 8: 1: 1, and stirring well to obtain a positive electrode slurry. Subsequently, coating a surface of a positive current collector aluminum foil with the positive electrode slurry, and performing drying, cold-pressing, and slitting to obtain a positive electrode plate.

### 3) Preparing a negative electrode plate

Adding carbon nanotubes and carboxymethyl cellulose (CMC) at a mass ratio of 1: 0.4 into deionized water, and stirring well to form a homogeneous slurry. Applying the slurry onto a negative current collector copper foil. Oven-drying the slurry, and cutting the foil to obtain a negative electrode plate without a negative electrode structure, where the areal density of the undercoat is 10 g/m², and the thickness of the undercoat is 5 µm.

### 4) Separator

Using a polypropylene film as a separator.

### 5) Preparing a battery

Tape-casting a non-Newtonian fluid electrolyte composition onto two sides of the separator, and then stacking the positive electrode plate, the separator coated with the non-Newtonian fluid electrolyte composition, and the negative electrode plate sequentially in such a way that the separator is located between the positive electrode plate and the negative electrode plate to serve a function of separation, and then winding the stacked structure to obtain a bare cell; welding tabs onto the bare cell, and putting the bare cell into an aluminum shell; and dehydrating the cell by drying the cell at 80 °C to obtain an uncharged cell. Performing steps such as static standing, hot- and cold-pressing, chemical formation, shaping, and capacity test on the uncharged cell to obtain an anode-free sodium battery product in Embodiment 1.

### Embodiments 2 to 4

The batteries in Embodiments 2 to 4 are prepared by a method similar to the battery preparation method in Embodiment 1 except the adjusted type of the sodium salt. The specific parameters are set out in Table 1.

### Embodiments 5 to 6

The batteries in Embodiments 5 to 6 are prepared by a method similar to the battery preparation method in Embodiment 1 except the adjusted type of the ionic liquid. The specific parameters are set out in Table 1.

### Embodiments 7 to 8

The batteries in Embodiments 7 to 8 are prepared by a method similar to the battery preparation method in Embodiment 1 except the adjusted type of the polymer. The specific parameters are set out in Table 1.

### Embodiment 9

The battery in Embodiment 9 is prepared by a method similar to the battery preparation method in Embodiment 1 except that the non-Newtonian fluid electrolyte composition is prepared by the following method:

Mixing polyethylene oxide (PEO, with a weight-average molecular weight of 600000), polyethylene glycol (PEG, with a weight-average molecular weight of 10000), a sodium bis(fluorosulfonyl)imide (NaFSI), and N-alkyl-N-methylpiperidine bis(trifluoromethanesulfonyl)imide ionic liquid at a mass ratio of 5: 2: 3: 10 in a dry argon atmosphere, and stirring well to completely dissolve the NaFSI to obtain a non-Newtonian fluid electrolyte composition.

### Embodiments 10 to 13

The batteries in Embodiments 10 to 13 are prepared by a method similar to the battery preparation method in Embodiment 1 except the adjusted type of the suspended particles. The specific parameters are set out in Table 1.

### Embodiment 14

The battery in Embodiment 14 is prepared by a method similar to the battery preparation method in Embodiment 1 except adjusted mass percentages of the sodium salt, the ionic liquid, the polymer, and the suspended particles. The specific parameters are set out in Table 1.

### Embodiment 15

The battery in Embodiment 15 is prepared by a method similar to the battery preparation method in Embodiment 1 except that the non-Newtonian fluid electrolyte composition is prepared by the following method:

Mixing gaseous silica, a sodium bis(fluorosulfonyl)imide (NaFSI), and N-alkyl-N-methylpiperidine bis(trifluoromethanesulfonyl)imide ionic liquid at a mass ratio of 1: 1: 3 in a dry argon atmosphere, stirring well to completely dissolve the NaFSI, and then cooling the mixture until a room temperature to obtain a non-Newtonian fluid electrolyte composition.

### Embodiments 16 to 17

The batteries in Embodiments 16 to 17 are prepared by a method similar to the battery preparation method in Embodiment 15 except the adjusted types of the ionic liquid and suspended particles. The specific parameters are set out in Table 1.

### Embodiment 18

The battery in Embodiment 18 is prepared by a method similar to the battery preparation method in Embodiment 1 except that the non-Newtonian fluid electrolyte composition is prepared by the following method:

Mixing polyethylene oxide (PEO, with a weight-average molecular weight of 600000), gaseous silica, sodium bis(fluorosulfonyl)imide (NaFSI), and a monoglyme (DME) organic solvent at a mass ratio of 5: 2: 3: 10 in a dry argon atmosphere, and stirring well to completely dissolve the NaFSI to obtain a non-Newtonian fluid electrolyte composition.

### Embodiments 19 to 20

The batteries in Embodiments 19 to 20 are prepared by a method similar to the battery preparation method in Embodiment 18 except the adjusted type of the organic solvent. The specific parameters are set out in Table 1.

### Embodiment 21

The battery in Embodiment 21 is prepared by a method similar to the battery preparation method in Embodiment 18 except adjusted mass percentages of the sodium salt, the organic solvent, the polymer, and the suspended particles. The specific parameters are set out in Table 1.

### Embodiment 22

The battery in Embodiment 22 is prepared by a method similar to the battery preparation method in Embodiment 18 except that the non-Newtonian fluid electrolyte composition is prepared by the following method:

Mixing gaseous silica, sodium bis(fluorosulfonyl)imide (NaFSI), and a monoglyme (DME) organic solvent at a mass ratio of 1: 1: 3 in a dry argon atmosphere, stirring well to completely dissolve the NaFSI, and then cooling the mixture until a room temperature to obtain a non-Newtonian fluid electrolyte composition.

### Embodiments 23 to 24

The batteries in Embodiments 23 to 24 are prepared by a method similar to the battery preparation method in Embodiment 22 except the adjusted types of the organic solvent and the suspended particles. The specific parameters are set out in Table 1.

### Embodiments 25 to 26

The batteries in Embodiments 25 to 26 are prepared by a method similar to the battery preparation method in Embodiment 1 except the adjusted type of the positive active material. The specific parameters are set out in Table 1, where the thickness of the ZrO₂ coating layer in Embodiment 26 is 30 nm.

### Embodiments 27 to 33

The batteries in Embodiments 27 to 33 are prepared by a method similar to the battery preparation method in Embodiment 1 except adjusted mass percentages of the sodium salt, the ionic liquid, the polymer, and the suspended particles. The specific parameters are set out in Table 1.

### Comparative Embodiment 1

The battery in Comparative Embodiment 1 is prepared by a method similar to the battery preparation method in Embodiment 1 except that the electrolyte is prepared by the following method:

Mixing polyethylene oxide (PEO, with a weight-average molecular weight of 600000), sodium bis(fluorosulfonyl)imide (NaFSI), and a monoglyme (DME) organic solvent at a mass ratio of 7: 3: 10 in a dry argon atmosphere, and stirring well to completely dissolve the NaFSI, and then cooling the mixture until a room temperature to obtain a quasi-solid electrolyte.

### Comparative Embodiment 2

The battery in Comparative Embodiment 2 is prepared by a method similar to the battery preparation method in Comparative Embodiment 1 except the adjusted mass percentages of the sodium salt, the organic solvent, and the polymer. The specific parameters are set out in Table 1.

### Comparative Embodiments 3 to 5

The batteries in Comparative Embodiment 3 to 5 are prepared by a method similar to the battery preparation method in Comparative Embodiment 1 except the adjusted type of the sodium salt. The specific parameters are set out in Table 1.

### Comparative Embodiment 6

The battery in Comparative Embodiment 6 is prepared by a method similar to the battery preparation method in Comparative Embodiment 1 except the adjusted type of the solvent. The specific parameters are set out in Table 1.

### Comparative Embodiments 7 to 9

The batteries in Comparative Embodiments 7 to 9 are prepared by a method similar to the battery preparation method in Comparative Embodiment 1 except that the electrolyte is a liquid electrolyte and the type of the positive electrode material is adjusted. The specific parameters are set out in Table 1, where the thickness of the ZrO₂ coating layer in Comparative Embodiment 9 is 30 nm.

### II. Performance test

### 1. Testing the performance of the non-Newtonian fluid electrolyte composition

### 1) Viscosity test

Rotary-stirring the non-Newtonian fluid electrolyte composition for 10 seconds and 10 minutes separately by using a Dveslvtjo rotary viscometer (manufactured by BROOKFIELD), and recording the viscosity values, where the test temperature is 25 °C and the rotation speed is 12 rpm. To measure a viscosity not lower than 2000 mPa·s, a 64# rotor is applied; to measure a viscosity lower than 2000 mPa·s, a 62# rotor is applied. The viscosity is measured for three times in parallel and the measured values are averaged out.

### 2) Loss factor test

Using a HAAKE rheometer as a test instrument. Cutting the non-Newtonian fluid electrolyte composition into disc-shaped specimens of a 20 mm diameter and a 1 mm thickness. Measuring the loss factor at a test temperature of 25 °C within a strain scanning range of 0.1% to 1000% and at a fixed frequency is 1 Hz, so as to obtain an storage modulus (G') and a loss modulus (G"). Calculating the loss factor (*tan* δ) as: *tan* δ = G"/G'.

### 3) Nail penetration strength test

Preparing and assembling a single-side-coated stacked-type cell or pouch cell in which the electrolyte is a non-Newtonian fluid electrolyte composition. Fixing the cell to a nail penetration test jig, and using a GoTech tensile machine to exert a force on a ø1 mm nail of a nail penetration tester to penetrate the cell at a speed of 6 mm/min. Stopping the penetration when the penetration depth reaches 2 mm, leaving the cell to stand, observing the change of the open-circuit voltage, and recording the time consumed when the open-circuit voltage drops to 2 mV.

### 4) Compression strength test

An exemplary test process is as follows: Using a semi-cylindrical squeezing plate with a radius of 75 mm to squeeze a battery in a direction perpendicular to the electrode plate of the battery at a squeezing speed of 60 mm/min; observing the changes of the open-circuit voltage of the battery and the pressure exerted by the squeezing plate; and recording the pressure exerted by the squeezing plate when the open-circuit voltage is zero.

### 2. Testing the battery performance

### 1) Testing the Coulombic efficiency

A process of testing the Coulombic efficiency is as follows: Charging a prepared battery at 25 °C at a constant current of 0.1C until the voltage reaches 3.7 V

(if the positive electrode is made from ferric sodium pyrophosphate) or 4.0 V (if the positive electrode is made from a layered oxide), and then charging the battery at a constant voltage of 3.7 V until the current drops to 0.01C, so as to obtain a first-cycle charge capacity (Cc₁); discharging the battery at a constant current of 0.1C until the voltage reaches 2.5 V, so as to obtain a first-cycle discharge capacity (Cd₁); repeating the above charging and discharging operations for n cycles, recording the number (n) of cycles counted when the capacity fades to 80%, and then calculating the average Coulombic efficiency of the battery as: Coulombic efficiency of each cycle = discharge capacity of this cycle (Cd1)/charge capacity of this cycle (Cc1) × 100%.

Averaging out the Coulombic efficiency values from the second cycle to the n^{th} cycle as the average Coulombic efficiency of the battery.

The test process for the comparative embodiment and other embodiments is the same as above.

### 2) Testing the number of cycles counted when the capacity retention rate fades to 80%

A process of testing the number of cycles counted when the capacity retention rate fades to 80% is as follows: Charging a prepared battery at 25 °C at a constant current of 1C until the voltage reaches 3.7 V (if the positive electrode is made from ferric sodium pyrophosphate) or 4.0 V (if the positive electrode is made from a layered oxide), and then charging the battery at a constant voltage of 3.7 V until the current drops to 0.1C; and then discharging the battery at a current of 1C until the voltage reaches 2.5 V, and recording the capacity at this time as an initial capacity (C₀); repeating the foregoing charging and discharging operations for the same battery, and recording the discharge capacity (Cₙ) of the battery at the end of the n^{th} cycle; calculating the capacity retention rate of the battery at the end of each cycle as: Pₙ = Cₙ/C₀ × 100%; and recording the number of cycles of the battery when Pₙ drops to 80%. The test process for the comparative embodiment and other embodiments is the same as above.

### 3. Testing the anti-gassing capability of the battery during cycling

A process of testing the anti-gassing capability of the battery during cycling is as follows: Charging a battery at 25 °C at a constant current of 1C for a first time until the voltage reaches an upper-limit voltage of 3.7 V (if the positive electrode is made from ferric sodium pyrophosphate) or 4.0 V (if the positive electrode is made from a layered oxide), and then charging the battery at a constant voltage until the current drops to a cut-off current; subsequently, discharging the battery at a constant current of 1C until the voltage finally reaches approximately 2.5 V, and recording the thickness D₁ of the battery at this time; repeating the charging and discharging operations for n cycles, and recording the number n of cycles counted when the capacity fades to 80% and the thickness Dₙ of the battery at the end of the n^{th} cycle; and calculating the expansion rate of the battery with the capacity retention rate fading to 80% as: expansion rate = (Dₙ - D₁)/D₁ × 100%. The test process for the comparative embodiment and other embodiments is the same as above.

### 4) Testing the stacking pressure

A process of testing the stacking pressure is as follows: Applying a pressure F to the surface of a battery by using a battery jig, controlling the pressure by adjusting the value of the pressure applied by a stamping press to the battery jig and adjusting the screw of the battery jig, and reading the pressure value displayed by a built-in pressure sensor of the battery; performing an alternating-current resistance test in an electrochemical workstation to obtain a resistance R that represents a sum of the ohmic resistance and the interface resistance of the electrolyte; plotting a resistance-pressure curve with the pressure as an abscissa and with the resistance as an ordinate, and recording the value of F at the minimum value of the resistance R.

### III. Analysis on the test results of embodiments and comparative embodiments

The batteries described in the embodiments and the comparative embodiments are prepared separately according to the foregoing methods, and the performance parameters of the batteries are measured. The test results are shown in Table 1 to Table 3 below.

**Table 1**

| Serial number | Non-Newtonian fluid electrolyte composition | | | | | | | | | |
|---|---|---|---|---|---|---|---|---|---|---|
| | Sodium salt | Mass percent (%) | Ionic liquid | Mass percent (%) | Organic solvent | Mass percent (%) | Polymer | Mass percent (%) | Suspen ded particle s | Mass percent (%) |
| Embodiment 1 | Sodium bis(fluorosulfon yl)imide | 15 | N-alkyl-N-methylpiperidine bis(trifluoromethanesulfonyl)i mide | 50 | / | / | Polyethyl ene oxide | 25 | Gaseou s silica | 10 |
| Embodiment 2 | Sodium chloride | 15 | N-alkyl-N-methylpiperidine bis(trifluoromethanesulfonyl)i mide | 50 | / | / | Polyethyl ene oxide | 25 | Gaseou s silica | 10 |
| Embodiment 3 | Sodium trifluoromethan esulfonate | 15 | N-alkyl-N-methylpiperidine bis(trifluoromethanesulfonyl)i mide | 50 | / | / | Polyethyl ene oxide | 25 | Gaseou s silica | 10 |
| Embodiment 4 | Sodium hexafluorophos phate | 15 | N-alkyl-N-methylpiperidine bis(trifluoromethanesulfonyl)i mide | 50 | / | / | Polyethyl ene oxide | 25 | Gaseou s silica | 10 |
| Embodiment 5 | Sodium bis(fluorosulfon yl)imide | 15 | Trihexyl(tetradecyl)phosphine bis(trifluoromethanesulfonyl)a mide | 50 | / | / | Polyethyl ene oxide | 25 | Gaseou s silica | 10 |
| Embodiment 6 | Sodium bis(fluorosulfon yl)imide | 15 | 1-alkyl-3-methylimidazole tetrafluoroborate | 50 | / | / | Polyethyl ene oxide | 25 | Gaseou s silica | 10 |
| Embodiment 7 | Sodium bis(fluorosulfon yl)imide | 15 | N-alkyl-N-methylpiperidine bis(trifluoromethanesulfonyl)i mide | 50 | / | / | Polyethyl ene glycol | 25 | Gaseou s silica | 10 |
| Embodiment 8 | Sodium bis(fluorosulfon yl)imide | 15 | N-alkyl-N-methylpiperidine bis(trifluoromethanesulfonyl)i mide | 50 | / | / | Polyvinyl pyrrolido ne | 25 | Gaseou s silica | 10 |
| Embodiment 9 | Sodium bis(fluorosulfon yl)imide | 15 | N-alkyl-N-methylpiperidine bis(trifluoromethanesulfonyl)i mide | 50 | / | / | Polyethyl ene oxide + polyethyl ene glycol | 25 | Gaseou s silica | 10 |
| Embodiment 10 | Sodium bis(fluorosulfon yl)imide | 15 | N-alkyl-N-methylpiperidine bis(trifluoromethanesulfonyl)i mide | 50 | / | / | Polyethyl ene oxide | 25 | Sodiu m oxide | 10 |
| Embodiment 11 | Sodium bis(fluorosulfon yl)imide | 15 | N-alkyl-N-methylpiperidine bis(trifluoromethanesulfonyl)i mide | 50 | / | / | Polyethyl ene oxide | 25 | Lithiu m oxide | 10 |
| Embodiment 12 | Sodium bis(fluorosulfon yl)imide | 15 | N-alkyl-N-methylpiperidine bis(trifluoromethanesulfonyl)i mide | 50 | / | / | Polyethyl ene oxide | 25 | Polyur ethane | 10 |
| Embodiment 13 | Sodium bis(fluorosulfon yl)imide | 15 | N-alkyl-N-methylpiperidine bis(trifluoromethanesulfonyl)i mide | 50 | / | / | Polyethyl ene oxide | 25 | Sodiu m fluorid e | 10 |
| Embodiment 14 | Sodium bis(fluorosulfon yl)imide | 20 | N-alkyl-N-methylpiperidine bis(trifluoromethanesulfonyl)i mide | 60 | / | / | Polyethyl ene oxide | 10 | Gaseou s silica | 10 |
| Embodiment 15 | Sodium bis(fluorosulfon yl)imide | 20 | N-alkyl-N-methylpiperidine bis(trifluoromethanesulfonyl)i mide | 60 | / | / | / | / | Gaseou s silica | 20 |
| Embodiment 16 | Sodium bis(fluorosulfon yl)imide | 20 | Trihexyl(tetradecyl)phosphine bis(trifluoromethanesulfonyl)a mide | 60 | / | / | / | / | Gaseou s silica | 20 |
| Embodiment 17 | Sodium bis(fluorosulfon yl)imide | 20 | N-alkyl-N-methylpiperidine bis(trifluoromethanesulfonyl)i mide | 60 | / | / | / | / | Sodiu m oxide | 20 |
| Embodiment 18 | Sodium bis(fluorosulfon yl)imide | 15 | / | / | Monogl yme | 50 | Polyethyl ene oxide | 25 | Gaseou s silica | 10 |
| Embodiment 19 | Sodium bis(fluorosulfon yl)imide | 15 | / | / | Ethylene carbonat e | 50 | Polyethyl ene oxide | 25 | Gaseou s silica | 10 |
| Embodiment 20 | Sodium bis(fluorosulfon yl)imide | 15 | / | / | Dimethy l sulfoxid e | 50 | Polyethyl ene oxide | 25 | Gaseou s silica | 10 |
| Embodiment 21 | Sodium bis(fluorosulfon yl)imide | 20 | / | / | Monogl yme | 60 | Polyethyl ene oxide | 10 | Gaseou s silica | 10 |
| Embodiment 22 | Sodium bis(fluorosulfon yl)imide | 20 | / | / | Monogl yme | 60 | / | / | Gaseou s silica | 20 |
| Embodiment 23 | Sodium bis(fluorosulfon yl)imide | 20 | / | / | Ethylene carbonat e | 60 | / | / | Gaseou s silica | 20 |
| Embodiment 24 | Sodium bis(fluorosulfon yl)imide | 20 | / | / | Monogl yme | 60 | / | / | Sodiu m oxide | 20 |
| Embodiment 25 | Sodium bis(fluorosulfon yl)imide | 15 | N-alkyl-N-methylpiperidine bis(trifluoromethanesulfonyl)i mide | 50 | / | / | Polyethyl ene oxide | 25 | Gaseou s silica | 10 |
| Embodiment 26 | Sodium bis(fluorosulfon yl)imide | 15 | N-alkyl-N-methylpiperidine bis(trifluoromethanesulfonyl)i mide | 50 | / | / | Polyethyl ene oxide | 25 | Gaseou s silica | 10 |
| Embodiment 27 | Sodium bis(fluorosulfon yl)imide | 5 | N-alkyl-N-methylpiperidine bis(trifluoromethanesulfonyl)i mide | 60 | / | / | Polyethyl ene oxide | 25 | Gaseou s silica | 10 |
| Embodiment 28 | Sodium bis(fluorosulfon yl)imide | 10 | N-alkyl-N-methylpiperidine bis(trifluoromethanesulfonyl)i mide | 55 | / | / | Polyethyl ene oxide | 25 | Gaseou s silica | 10 |
| Embodiment 29 | Sodium bis(fluorosulfon yl)imide | 18 | N-alkyl-N-methylpiperidine bis(trifluoromethanesulfonyl)i mide | 47 | / | / | Polyethyl ene oxide | 25 | Gaseou s silica | 10 |
| Embodiment 30 | Sodium bis(fluorosulfon yl)imide | 20 | N-alkyl-N-methylpiperidine bis(trifluoromethanesulfonyl)i mide | 45 | / | / | Polyethyl ene oxide | 25 | Gaseou s silica | 10 |
| Embodiment 31 | Sodium bis(fluorosulfon yl)imide | 20 | N-alkyl-N-methylpiperidine bis(trifluoromethanesulfonyl)i mide | 55 | / | / | Polyethyl ene oxide | 5 | Gaseou s silica | 20 |
| Embodiment 32 | Sodium bis(fluorosulfon yl)imide | 20 | N-alkyl-N-methylpiperidine bis(trifluoromethanesulfonyl)i mide | 45 | / | / | Polyethyl ene oxide | 15 | Gaseou s silica | 20 |
| Embodiment 33 | Sodium bis(fluorosulfon yl)imide | 20 | N-alkyl-N-methylpiperidine bis(trifluoromethanesulfonyl)i mide | 35 | / | / | Polyethyl ene oxide | 40 | Gaseou s silica | 5 |
| Comparative Embodiment 1 | Sodium bis(fluorosulfon yl)imide | 15 | / | / | Monogl yme | 50 | Polyethyl ene oxide | 35 | / | / |
| Comparative Embodiment 2 | Sodium bis(fluorosulfon yl)imide | 20 | / | / | Monogl yme | 55 | Polyethyl ene oxide | 25 | / | / |
| Comparative Embodiment 3 | Sodium chloride | 15 | / | / | Monogl yme | 50 | Polyethyl ene oxide | 35 | / | / |
| Comparative Embodiment 4 | Sodium trifluoromethan esulfonate | 15 | / | / | Monogl yme | 50 | Polyethyl ene oxide | 35 | / | / |
| Comparative Embodiment 5 | Sodium hexafluorophos phate | 15 | / | / | Monogl yme | 50 | Polyethyl ene oxide | 35 | / | / |
| Comparative Embodiment 6 | Sodium bis(fluorosulfon yl)imide | 15 | / | / | Ethylene carbonat e | 50 | Polyethyl ene oxide | 35 | / | / |
| Comparative Embodiment 7 | Sodium bis(fluorosulfon yl)imide | 15 | / | / | Monogl yme | 85 | / | / | / | / |
| Comparative Embodiment 8 | Sodium bis(fluorosulfon yl)imide | 15 | / | / | Monogl yme | 85 | / | / | / | / |
| Comparative Embodiment 9 | Sodium bis(fluorosulfon yl)imide | 15 | / | / | Monogl yme | 85 | / | / | / | / |

**Table 2**

| Serial number | Performance test | | | | | | |
|---|---|---|---|---|---|---|---|
| | Viscosity obtained after testing for 10 s (mPa·s) | Viscosity obtained after testing for 10 min (mPa·s) | Initial loss factor | Post-thixotropic loss factor (nail penetration, squeezing) | Change rate of post-thixotropic loss factor (nail penetration, squeezing) (%) | Time taken for open-circuit voltage to drop to 2 mV after nail penetration (h) | Compression strength for open-circuit voltage to drop to zero (kN) |
| Embodiment 1 | 14125 | 15894 | 2.1 | 0.9 | 57.14% | 5.7 | 127 |
| Embodiment 2 | 13287 | 14328 | 3.3 | 1.7 | 48.48% | 2.4 | 67 |
| Embodiment 3 | 10986 | 12786 | 3.5 | 1.5 | 57.14% | 1.9 | 52 |
| Embodiment 4 | 13942 | 16973 | 2.7 | 1.1 | 59.26% | 5.9 | 107 |
| Embodiment 5 | 13564 | 15134 | 2.8 | 0.8 | 71.43% | 5.3 | 114 |
| Embodiment 6 | 13347 | 14879 | 3.0 | 1.7 | 43.33% | 3.6 | 83 |
| Embodiment 7 | 11002 | 12648 | 3.6 | 2.0 | 44.44% | 1.7 | 56 |
| Embodiment 8 | 12567 | 14764 | 2.6 | 1.6 | 38.46% | 2.8 | 78 |
| Embodiment 9 | 12016 | 14001 | 2.8 | 1.4 | 50.00% | 3.8 | 90 |
| Embodiment 10 | 12852 | 14284 | 2.3 | 1.2 | 47.83% | 4.1 | 98 |
| Embodiment 11 | 13025 | 14873 | 2.5 | 1.3 | 48.00% | 4.4 | 104 |
| Embodiment 12 | 14985 | 16468 | 1.8 | 0.5 | 72.22% | 6.3 | 156 |
| Embodiment 13 | 12347 | 14124 | 2.6 | 1.3 | 50.00% | 4.7 | 101 |
| Embodiment 14 | 13475 | 15239 | 2.3 | 0.7 | 69.57% | 6.1 | 149 |
| Embodiment 15 | 8036 | 8751 | 2.9 | 1.8 | 37.93% | 2.3 | 84 |
| Embodiment 16 | 9237 | 10014 | 3.4 | 2.2 | 35.29% | 1.9 | 61 |
| Embodiment 17 | 6097 | 6628 | 2.7 | 2.1 | 22.22% | 1.8 | 55 |
| Embodiment 18 | 3346 | 3809 | 3.8 | 2.7 | 28.95% | 1.6 | 44 |
| Embodiment 19 | 3674 | 4285 | 3.9 | 2.5 | 35.90% | 0.8 | 37 |
| Embodiment 20 | 2863 | 3312 | 2.7 | 2.3 | 14.81% | 0.6 | 35 |
| Embodiment 21 | 2653 | 3208 | 2.9 | 2.5 | 13.79% | 0.9 | 35 |
| Embodiment 22 | 1516 | 1784 | 2.6 | 2.1 | 19.23% | 1.9 | 40 |
| Embodiment 23 | 1658 | 2509 | 2.5 | 2.0 | 20.00% | 1.4 | 36 |
| Embodiment 24 | 1345 | 2218 | 2.7 | 2.2 | 18.52% | 1.3 | 42 |
| Embodiment 25 | 14125 | 15894 | 2.1 | 0.9 | 57.14% | 5.7 | 127 |
| Embodiment 26 | 14125 | 15894 | 2.1 | 0.9 | 57.14% | 5.7 | 127 |
| Embodiment 27 | 14573 | 16025 | 2.3 | 1.0 | 56.52% | 5.5 | 118 |
| Embodiment 28 | 14952 | 16572 | 2.4 | 0.8 | 66.67% | 6.0 | 122 |
| Embodiment 29 | 14015 | 15698 | 2.4 | 0.8 | 66.67% | 5.8 | 131 |
| Embodiment 30 | 13648 | 15218 | 2.0 | 0.6 | 70.00% | 5.5 | 132 |
| Embodiment 31 | 12423 | 13754 | 2.2 | 0.7 | 68.18% | 6.3 | 136 |
| Embodiment 32 | 13976 | 15125 | 2.5 | 0.7 | 72.00% | 6.7 | 140 |
| Embodiment 33 | 16257 | 17578 | 3.0 | 1.0 | 66.67% | 4.9 | 124 |
| Comparative Embodiment 1 | 673 | 687 | 2.7 | 2.6 | 3.70% | 0.5 | 28 |
| Comparative Embodiment 2 | 550 | 569 | 2.5 | 2.5 | 0.00% | 0.6 | 29 |
| Comparative Embodiment 3 | 530 | 538 | 2.3 | 2.1 | 8.70% | 0.3 | 27 |
| Comparative Embodiment 4 | 491 | 505 | 2.3 | 2.3 | 0.00% | 0.4 | 28 |
| Comparative Embodiment 5 | 659 | 666 | 2.6 | 2.5 | 3.85% | 0.6 | 30 |
| Comparative Embodiment 6 | 662 | 671 | 2.8 | 2.8 | 0.00% | 0.1 | 30 |
| Comparative Embodiment 7 | 124 | 139 | 5.2 | 5.4 | 3.80% | 0.1 | 25 |
| Comparative Embodiment 8 | 124 | 139 | 5.2 | 5.4 | 3.80% | 0.1 | 25 |
| Comparative Embodiment 9 | 124 | 139 | 5.2 | 5.4 | 3.80% | 0.1 | 25 |

**Table 3**

| Serial number | Battery | | | | |
|---|---|---|---|---|---|
| | Positive active material | Average Coulombic efficiency (%) | Number of cycles counted when capacity retention rate fades to 80% (cls) | Expansion rate measured when capacity retention rate fades to 80% (%) | Stacking pressure for implementing minimum ohmic resistance and interface resistance of electrolyte (kN) |
| Embodiment 1 | Na₄Fe₃(PO₄)₂P₂O₇ | 99.9 | 2500 | 9 | 7 |
| Embodiment 2 | Na₄Fe₃(PO₄)₂P₂O₇ | 99.0 | 600 | 32 | 14 |
| Embodiment 3 | Na₄Fe₃(PO₄)₂P₂O₇ | 99.6 | 1250 | 25 | 17 |
| Embodiment 4 | Na₄Fe₃(PO₄)₂P₂O₇ | 99.5 | 1000 | 15 | 8 |
| Embodiment 5 | Na₄Fe₃(PO₄)₂P₂O₇ | 99.7 | 1500 | 22 | 9 |
| Embodiment 6 | Na₄Fe₃(PO₄)₂P₂O₇ | 99.3 | 850 | 33 | 11 |
| Embodiment 7 | Na₄Fe₃(PO₄)₂P₂O₇ | 99.5 | 1150 | 19 | 14 |
| Embodiment 8 | Na₄Fe₃(PO₄)₂P₂O₇ | 99.4 | 1000 | 18 | 16 |
| Embodiment 9 | Na₄Fe₃(PO₄)₂P₂O₇ | 99.7 | 1400 | 14 | 10 |
| Embodiment 10 | Na₄Fe₃(PO₄)₂P₂O₇ | 99.9 | 2000 | 8 | 13 |
| Embodiment 11 | Na₄Fe₃(PO₄)₂P₂O₇ | 99.9 | 2500 | 10 | 12 |
| Embodiment 12 | Na₄Fe₃(PO₄)₂P₂O₇ | 99.1 | 750 | 35 | 5 |
| Embodiment 13 | Na₄Fe₃(PO₄)₂P₂O₇ | 99.8 | 1650 | 14 | 11 |
| Embodiment 14 | Na₄Fe₃(PO₄)₂P₂O₇ | 99.9 | 2300 | 11 | 5 |
| Embodiment 15 | Na₄Fe₃(PO₄)₂P₂O₇ | 99.8 | 1700 | 15 | 15 |
| Embodiment 16 | Na₄Fe₃(PO₄)₂P₂O₇ | 99.4 | 950 | 29 | 17 |
| Embodiment 17 | Na₄Fe₃(PO₄)₂P₂O₇ | 99.6 | 1250 | 17 | 16 |
| Embodiment 18 | Na₄Fe₃(PO₄)₂P₂O₇ | 99.9 | 2250 | 9 | 19 |
| Embodiment 19 | Na₄Fe₃(PO₄)₂P₂O₇ | 98.6 | 350 | 39 | 18 |
| Embodiment 20 | Na₄Fe₃(PO₄)₂P₂O₇ | 98.9 | 450 | 37 | 18 |
| Embodiment 21 | Na₄Fe₃(PO₄)₂P₂O₇ | 99.9 | 2000 | 10 | 19 |
| Embodiment 22 | Na₄Fe₃(PO₄)₂P₂O₇ | 99.7 | 1550 | 12 | 17 |
| Embodiment 23 | Na₄Fe₃(PO₄)₂P₂O₇ | 98.4 | 300 | 37 | 19 |
| Embodiment 24 | Na₄Fe₃(PO₄)₂P₂O₇ | 99.8 | 1750 | 12 | 17 |
| Embodiment 25 | Na[Cu_{1/9}Ni_{2/9}Fe_{1 /3}Mn_{1 /3}]O₂ | 99.0 | 500 | 31 | 9 |
| Embodiment 26 | ZrO₂-coated Na_{2/3}Ni_{1/6}Mn_{2/3}Cu_{1/9}Mg_{1/18} O₂ | 99.3 | 650 | 22 | 10 |
| Embodiment 27 | Na₄Fe₃(PO₄)₂P₂O₇ | 99.8 | 1650 | 10 | 9 |
| Embodiment 28 | Na₄Fe₃(PO₄)₂P₂O₇ | 99.8 | 1700 | 11 | 8 |
| Embodiment 29 | Na₄Fe₃(PO₄)₂P₂O₇ | 99.9 | 2450 | 13 | 7 |
| Embodiment 30 | Na₄Fe₃(PO₄)₂P₂O₇ | 99.9 | 2500 | 12 | 5 |
| Embodiment 31 | Na₄Fe₃(PO₄)₂P₂O₇ | 99.9 | 2300 | 13 | 6 |
| Embodiment 32 | Na₄Fe₃(PO₄)₂P₂O₇ | 99.9 | 2200 | 10 | 5 |
| Embodiment 33 | Na₄Fe₃(PO₄)₂P₂O₇ | 99.9 | 2350 | 11 | 11 |
| Comparative Embodiment 1 | Na₄Fe₃(PO₄)₂P₂O₇ | 99.7 | 1250 | 20 | 22 |
| Comparative Embodiment 2 | Na₄Fe₃(PO₄)₂P₂O₇ | 99.7 | 1350 | 22 | 24 |
| Comparative Embodiment 3 | Na₄Fe₃(PO₄)₂P₂O₇ | 98.8 | 400 | 44 | 25 |
| Comparative Embodiment 4 | Na₄Fe₃(PO₄)₂P₂O₇ | 99.1 | 550 | 39 | 22 |
| Comparative Embodiment 5 | Na₄Fe₃(PO₄)₂P₂O₇ | 99.1 | 500 | 20 | 25 |
| Comparative Embodiment 6 | Na₄Fe₃(PO₄)₂P₂O₇ | 98.3 | 250 | 40 | 24 |
| Comparative Embodiment 7 | Na₄Fe₃(PO₄)₂P₂O₇ | 99.5 | 1100 | 18 | 23 |
| Comparative Embodiment 8 | Na[Cu_{1/9}Ni_{2/9}Fe_{1/3}Mn_{1/3}]O₂ | 97.3 | 200 | 25 | 21 |
| Comparative Embodiment 9 | ZrO₂-coated Na_{2/3}Ni_{1/6}Mn_{2/3}Cu_{1/9}Mg_{1/18} O₂ | 98.0 | 250 | 22 | 20 |

As can be seen from the above results, in Embodiments 1 to 33, in response to an applied shear force, the viscosity of the non-Newtonian fluid electrolyte composition varies with the shear time. The sodium salt in the non-Newtonian fluid electrolyte composition is selected from sodium chloride, sodium hexafluorophosphate, sodium trifluoromethanesulfonate, or sodium bis(fluorosulfonyl)imide. The ionic liquid in the non-Newtonian fluid electrolyte composition is selected from N-alkyl-N-methylpiperidine bis(trifluoromethanesulfonyl)imide, trihexyl(tetradecyl)phosphine bis(trifluoromethanesulfonyl)amide, or 1-alkyl-3-methylimidazole tetrafluoroborate. The organic solvent in the non-Newtonian fluid electrolyte composition is selected from monoglyme, ethylene carbonate, or dimethyl sulfoxide. The polymer in the non-Newtonian fluid electrolyte composition is selected from one or two of polyethylene oxide, polyethylene glycol, or polyethylene pyrrolidone. The suspended particles in the non-Newtonian fluid electrolyte composition are selected from gaseous silica, sodium oxide, lithium oxide, polyurethane, or sodium fluoride.

As can be seen from Embodiments 1 to 33 versus Comparative Embodiments 1 to 6, compared to conventional electrolytes, the non-Newtonian fluid electrolyte composition does not comply with the Newtonian viscosity law. The post-thixotropic loss factor of the non-Newtonian fluid electrolyte composition decreases by more than 10% (decrease rate of the loss factor = (pre-thixotropic loss factor - post-thixotropic loss factor)/pre-thixotropic loss factor × 100%), thereby raising the compression strength measured when the open-circuit voltage drops to zero, lowering the stacking pressure required for achieving the minimum ohmic resistance and interface resistance of the electrolyte, significantly improving the impact resistance of the battery, and improving the assembling process of the battery.

As can be seen from comparison of Embodiments 14 and 15 and Embodiments 21 and 22, the polyethylene oxide added in the non-Newtonian fluid electrolyte composition increases the number of cycles counted when the capacity retention rate of the battery fades to 80%, and reduces the expansion rate measured when the capacity retention rate fades to 80%.

As can be seen from Embodiments 1 and 18 versus Comparative Embodiment 1, Embodiments 14 to 15 and Embodiments 21 to 22 versus Comparative Embodiment 2, Embodiment 2 versus Comparative Embodiment 3, Embodiment 3 versus Comparative Embodiment 4, Embodiment 4 versus Comparative Embodiment 5, and Embodiment 19 versus Comparative Embodiment 6, the sodium salt in the non-Newtonian fluid electrolyte composition is selected from sodium chloride, sodium hexafluorophosphate, sodium trifluoromethanesulfonate, or sodium bis(fluorosulfonyl)imide, thereby increasing the time taken for the open-circuit voltage to drop to 2 mV and the compression strength measured when the open-circuit voltage drops to zero after the non-Newtonian fluid electrolyte composition is penetrated by a nail, increasing the number of cycles counted when the capacity retention rate of the battery fades to 80%, reducing the expansion rate measured when the capacity retention rate of the battery fades to 80%, and lowering the stacking pressure required for achieving the minimum ohmic resistance and interface resistance of the electrolyte. As can be seen from comparison of Embodiments 1 and 3 and Embodiments 2 and 4, the sodium salt selected from sodium trifluoromethanesulfonate or sodium bis(fluorosulfonyl)imide increases the decrease rate of the post-thixotropic loss factor of the non-Newtonian fluid electrolyte composition, further improves the average Coulombic efficiency of the battery, and significantly increases the number of cycles counted when the capacity retention rate fades to 80%.

As can be seen from Embodiments 1 and 5 to 6 versus Comparative Embodiment 1, Embodiments 14 to 16 versus Comparative Embodiment 2, the ionic liquid in the non-Newtonian fluid electrolyte composition is selected from N-alkyl-N-methylpiperidine bis(trifluoromethanesulfonyl)imide, trihexyl(tetradecyl)phosphine bis(trifluoromethanesulfonyl)amide, or 1-alkyl-3-methylimidazole tetrafluoroborate, thereby increasing the time taken for the open-circuit voltage to drop to 2 mV and the compression strength measured when the open-circuit voltage drops to zero after the non-Newtonian fluid electrolyte composition is penetrated by a nail, lowering the stacking pressure required for achieving the minimum ohmic resistance and interface resistance of the electrolyte, and improving the assembling process of the battery. As can be seen from Embodiments 1 and 5 versus Embodiment 6 as well as Embodiment 15 versus Embodiment 16, the ionic liquid selected from N-alkyl-N-methylpiperidine bis(trifluoromethanesulfonyl)imide or trihexyl(tetradecyl)phosphine bis(trifluoromethanesulfonyl)amide further increases the time taken for the open-circuit voltage to drop to 2 mV and the compression strength measured when the open-circuit voltage drops to zero after the non-Newtonian fluid electrolyte composition is penetrated by a nail, more effectively improves the average Coulombic efficiency of the battery, more effectively increases the number of cycles counted when the capacity retention rate fades to 80%, significantly reduces the expansion rate measured when the capacity retention rate of the battery fades to 80%, and significantly lowers the stacking pressure required for achieving the minimum ohmic resistance and interface resistance of the electrolyte.

As can be seen from Embodiments 1 and 7 to 9 versus Comparative Embodiment 1, the polymer in the non-Newtonian fluid electrolyte composition is one or two selected from polyethylene oxide, polyethylene glycol, or polyvinylpyrrolidone, thereby increasing the time taken for the open-circuit voltage to drop to 2 mV and the compression strength for the open-circuit voltage to drop to zero after the non-Newtonian fluid electrolyte composition is penetrated by a nail, reducing the expansion rate measured when the capacity retention rate of the battery fades to 80%, and lowering the stacking pressure for achieving the minimum ohmic resistance and interface resistance of the electrolyte. As can be seen from Embodiments 1, 7, and 9 versus Embodiment 8, controlling the polymer to be one or two selected from polyethylene oxide or polyethylene glycol further improves the average Coulombic efficiency of the battery, further increases the number of cycles counted when the capacity retention rate fades to 80%, and significantly lowers the stacking pressure required for achieving the minimum ohmic resistance and interface resistance of the electrolyte.

As can be seen from Embodiments 1 and 10 to 13 versus Comparative Embodiment 1 as well as Embodiments 14 to 15, 17, 21 to 22, and 24 versus Comparative Embodiment 2, the suspended particles in the non-Newtonian fluid electrolyte composition are selected from gaseous silica, sodium oxide, lithium oxide, polyurethane, or sodium fluoride, thereby increasing the time taken for the open-circuit voltage to drop to 2 mV and the compression strength measured when the open-circuit voltage drops to zero after the non-Newtonian fluid electrolyte composition is penetrated by a nail, and lowering the stacking pressure required for achieving the minimum ohmic resistance and interface resistance of the electrolyte. As can be seen from Embodiments 1 and 10 to 11 versus Embodiments 12 to 13, the suspended particles selected from the gaseous silica, sodium oxide, or lithium oxide further improve the average Coulombic efficiency of the battery, further increase the number of cycles counted when the capacity retention rate fades to 80%, and significantly reduce the expansion rate measured when the capacity retention rate of the battery fades to 80%.

As can be seen from Embodiments 18 and 20 versus Comparative Embodiment 1, Embodiments 21 to 22 versus Comparative Embodiment 2, and Embodiments 19 and 23 versus Comparative Embodiment 6, the organic solvent in the non-Newtonian fluid electrolyte composition is selected from monoglyme, ethylene carbonate, or dimethyl sulfoxide, thereby increasing the time taken for the open-circuit voltage to drop to 2 mV and the compression strength measured when the open-circuit voltage drops to zero after the non-Newtonian fluid electrolyte composition is penetrated by a nail, and lowering the stacking pressure required for achieving the minimum ohmic resistance and interface resistance of the electrolyte. As can be seen from Embodiment 18 versus Embodiments 19 to 20 as well as Embodiment 22 versus Embodiment 23, controlling the organic solvent to be monoglyme further increases the time taken for the open-circuit voltage to drop to 2 mV and the compression strength measured when the open-circuit voltage drops to zero after the non-Newtonian fluid electrolyte composition is penetrated by a nail, more effectively improves the average Coulombic efficiency of the battery, more effectively increases the number of cycles counted when the capacity retention rate fades to 80%, significantly reduces the expansion rate measured when the capacity retention rate of the battery fades to 80%.

As can be seen from Embodiments 1 and 3 versus Embodiments 2 and 4, Embodiments 1 and 5 versus Embodiment 6, Embodiment 15 versus Embodiment 16, Embodiments 1 and 8 to 9 versus Embodiment 7, Embodiments 1 and 10 to 11 versus Embodiments 12 to 13, Embodiment 18 versus Embodiments 19 to 20, and Embodiment 22 versus Embodiment 23, controlling the sodium salt to be selected from sodium trifluoromethanesulfonate or sodium bis(fluorosulfonyl)imide, controlling the ionic liquid to be N-alkyl-N-methylpiperidine bis(trifluoromethanesulfonyl)imide or trihexyl(tetradecyl)phosphine bis(trifluoromethanesulfonyl)amide, controlling the polymer to be one or two selected from polyethylene oxide or polyethylene glycol, controlling the suspended particles to be selected from gaseous silica, sodium oxide, or lithium oxide, and controlling the organic solvent to be monoglyme further improve the average Coulombic efficiency of the battery and significantly increase the number of cycles counted when the capacity retention rate fades to 80%.

As can be seen from Embodiments 1, 3, 5, 7, and 8 to 11 versus Comparative Embodiment 1 as well as Embodiment 14 versus Comparative Embodiment 2, controlling the sodium salt to be sodium trifluoromethanesulfonate or sodium bis(fluorosulfonyl)imide, controlling the ionic liquid to be N-alkyl-N-methylpiperidine bis(trifluoromethanesulfonyl)imide or trihexyl(tetradecyl)phosphine bis(trifluoromethanesulfonyl)amide, controlling the polymer to be one or two selected from polyethylene oxide or polyethylene glycol, and controlling the suspended particles to be gaseous silica, sodium oxide, or lithium oxide increase the time taken for the open-circuit voltage to drop to 2 mV and the compression strength measured when the open-circuit voltage drops to zero after the non-Newtonian fluid electrolyte composition is penetrated by a nail, and lowering the stacking pressure required for achieving the minimum ohmic resistance and interface resistance of the electrolyte.

As can be seen from Embodiments 1 and 3 versus Embodiments 2 and 4, Embodiments 1 and 5 versus Embodiment 6, Embodiments 1 and 8 to 9 versus Embodiment 7, and Embodiments 1 and 10 to 11 versus Embodiments 12 to 13, controlling the sodium salt to be sodium trifluoromethanesulfonate or sodium bis(fluorosulfonyl)imide, controlling the ionic liquid to be N-alkyl-N-methylpiperidine bis(trifluoromethanesulfonyl)imide or trihexyl(tetradecyl)phosphine bis(trifluoromethanesulfonyl)amide, controlling the polymer to be one or two selected from polyethylene oxide or polyethylene glycol, and controlling the suspended particles to be selected from gaseous silica, sodium oxide, or lithium oxide further improve the average Coulombic efficiency of the battery, and further increase the number of cycles counted when the capacity retention rate fades to 80%.

As can be seen from Embodiments 15 to 17 versus Comparative Embodiment 1, controlling the sodium salt to be sodium bis(fluorosulfonyl)imide, controlling the ionic liquid to be N-alkyl-N-methylpiperidine bis(trifluoromethanesulfonyl)imide or trihexyl(tetradecyl)phosphine bis(trifluoromethanesulfonyl)amide, and controlling the suspended particles to be gaseous silica or sodium oxide increase the time taken for the open-circuit voltage to drop to 2 mV and the compression strength measured when the open-circuit voltage drops to zero after the non-Newtonian fluid electrolyte composition is penetrated by a nail, and lower the stacking pressure required for achieving the minimum ohmic resistance and interface resistance of the electrolyte.

As can be seen from Embodiment 18 versus Comparative Embodiment 1 as well as Embodiment 21 versus Comparative Embodiment 2, controlling the sodium salt to be sodium bis(fluorosulfonyl)imide, controlling the organic solvent to be monoglyme, controlling the polymer to be polyethylene oxide, and controlling the suspended particles to be gaseous silica increase the time taken for the open-circuit voltage to drop to 2 mV and the compression strength measured when the open-circuit voltage drops to zero after the non-Newtonian fluid electrolyte composition is penetrated by a nail, improve the average Coulombic efficiency of the battery, increase the number of cycles counted when the capacity retention rate fades to 80%, reduce the expansion rate measured when the capacity retention rate of the battery fades to 80%, and lower the stacking pressure required for achieving the minimum ohmic resistance and interface resistance of the electrolyte.

As can be seen from Embodiment 18 versus Embodiments 19 to 20, controlling the sodium salt to be sodium bis(fluorosulfonyl)imide, controlling the organic solvent to be monoglyme, controlling the polymer to be polyethylene oxide, and controlling the suspended particles to be gaseous silica increase the time taken for the open-circuit voltage to drop to 2 mV and the compression strength measured when the open-circuit voltage drops to zero after the non-Newtonian fluid electrolyte composition is penetrated by a nail, more effectively improve the average Coulombic efficiency of the battery, more effectively increase the number of cycles counted when the capacity retention rate fades to 80%, significantly reduce the expansion rate measured when the capacity retention rate of the battery fades to 80%.

As can be seen from Embodiments 22 and 24 versus Comparative Embodiment 2, controlling the sodium salt to be sodium bis(fluorosulfonyl)imide, controlling the organic solvent to be monoglyme, and controlling the suspended particles to be gaseous silica or sodium oxide increase the time taken for the open-circuit voltage to drop to 2 mV and the compression strength measured when the open-circuit voltage drops to zero after the non-Newtonian fluid electrolyte composition is penetrated by a nail, increase the number of cycles counted when the capacity retention rate fades to 80%, reduce the expansion rate measured when the capacity retention rate of the battery fades to 80%, and lower the stacking pressure required for achieving the minimum ohmic resistance and interface resistance of the electrolyte.

As can be seen from Embodiments 22 and 24 versus Embodiment 23, controlling the sodium salt to be sodium bis(fluorosulfonyl)imide, controlling the organic solvent to be monoglyme, and controlling the suspended particles to be gaseous silica or sodium oxide further increase the compression strength measured when the open-circuit voltage drops to zero after the non-Newtonian fluid electrolyte composition is penetrated by a nail, more effectively improve the average Coulombic efficiency of the battery, more effectively increase the number of cycles counted when the capacity retention rate fades to 80%, significantly reduce the expansion rate measured when the capacity retention rate of the battery fades to 80%, and significantly lower the stacking pressure required for achieving the minimum ohmic resistance and interface resistance of the electrolyte.

As can be seen from Embodiment 1 versus Embodiments 25 to 26, in contrast to Na(Cu_{1/9}Ni_{2/9}Fe_{1/3}Mn_{1/3})O₂ or ZrO₂-/TiO₂-coated Na_{2/3}Ni_{1/6}Mn_{2/3}Cu_{1/9}Mg_{1/18}O₂ used as a positive active material, the Na₄Fe₃(PO₄)₂P₂O₇ used as a positive active material can more favorably improve the average Coulombic efficiency of the battery and increase the number of cycles counted when the capacity retention rate fades to 80%, significantly reduce the expansion rate measured when the capacity retention rate fades to 80%, and significantly lower the stacking pressure required for achieving the minimum ohmic resistance and interface resistance of the electrolyte.

As can be seen from Embodiment 25 versus Embodiment 26, in contrast to Na(Cu_{1/9}Ni_{2/9}Fe_{1/3}Mn_{1/3})O₂ used as a positive active material, the ZrO₂- or TiO₂-coated Na_{2/3}Ni_{1/6}Mn_{2/3}Cu_{1/9}Mg_{1/18}O₂ used as a positive active material can more favorably improve the average Coulombic efficiency of the battery and increase the number of cycles counted when the capacity retention rate fades to 80%, and significantly reduce the expansion rate measured when the capacity retention rate of the battery fades to 80%.

As can be seen from Embodiment 14 versus Embodiment 21 as well as Embodiment 15 versus Embodiment 22, compared to the non-Newtonian fluid electrolyte composition containing monoglyme as an organic solvent, the non-Newtonian fluid electrolyte containing the N-alkyl-N-methylpiperidine bis(trifluoromethanesulfonyl)imide as an ionic liquid exhibits higher performance, increases the time taken for the open-circuit voltage to drop to 2 mV and the compression strength measured when the open-circuit voltage drops to zero after the non-Newtonian fluid electrolyte composition is penetrated by a nail, increases the number of cycles counted when the capacity retention rate of the battery fades to 80%, and lowers the stacking pressure required for achieving the minimum ohmic resistance and interface resistance of the electrolyte.

As can be seen from Embodiment 1 and Embodiments 27 to 34 versus Comparative Embodiment 1, based on the total mass of the non-Newtonian fluid electrolyte composition, the mass percent of the electrolyte salt is 5% to 20%, the mass percent of the ionic liquid is 20% to 60%, the mass percent of the polymer is 0% to 40%, and the mass percent of the suspended particles is greater than 0 and less than or equal to 20%, thereby increasing the time taken for the open-circuit voltage to drop to 2 mV and the compression strength measured when the open-circuit voltage drops to zero after the non-Newtonian fluid electrolyte composition is penetrated by a nail, improving the average Coulombic efficiency of the battery, increasing the number of cycles counted when the capacity retention rate fades to 80%, reducing the expansion rate measured when the capacity retention rate of the battery fades to 80%, and lowering the stacking pressure required for achieving the minimum ohmic resistance and interface resistance of the electrolyte.

As can be seen from Embodiment 18 and Embodiments 25 to 26 versus Comparative Embodiments 7 to 9, in comparison with a battery containing a liquid electrolyte of similar constituents, the non-Newtonian fluid electrolyte composition are applicable to a variety of positive electrode materials, and can effectively suppress gas production in the battery by virtue of a high viscosity, thereby improving the cycle performance of the battery, and especially, effectively improving the cycle performance of the layered oxide of the positive electrode at a high voltage.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. An electrolyte composition, **characterized in that** the electrolyte composition is a non-Newtonian fluid electrolyte composition.

2. The electrolyte composition according to claim 1, **characterized in that** a viscosity of the electrolyte composition is 1000 mPa·s to 50000 mPa·s after the electrolyte composition is rotary-stirred at 25 °C for 10 seconds at a speed of 12 rpm by using a 62# or 64# rotor of a Dveslvtjo rotary viscometer.

3. The electrolyte composition according to claim 1, **characterized in that** the viscosity of the electrolyte composition increases by more than 100 mPa·s after the electrolyte composition is rotary-stirred at 25 °C for 10 minutes at a speed of 12 rpm by using a 62# or 64# rotor of a Dveslvtjo rotary viscometer in comparison with the viscosity of the electrolyte composition tested under same conditions for 10 seconds.

4. The electrolyte composition according to any one of claims 1 to 3, **characterized in that** a post-thixotropic loss factor of the non-Newtonian fluid electrolyte composition is lower than a pre-thixotropic loss factor by more than 10% as a decrease rate.

5. The electrolyte composition according to any one of claims 1 to 3, **characterized in that** the non-Newtonian fluid electrolyte composition comprises: an organic solvent or an ionic liquid; an electrolyte salt; and suspended particles.

6. The electrolyte composition according to any one of claims 1 to 5, **characterized in that** the non-Newtonian fluid electrolyte composition further comprises a polymer.

7. The electrolyte composition according to claim 5 or 6, **characterized in that** the electrolyte salt comprises a sodium salt; and the sodium salt comprises one or more of sodium chloride, sodium bromide, sodium nitrate, sodium perchlorate, sodium hexafluorophosphate, sodium acetate, sodium trifluoroacetate, sodium trifluoromethanesulfonate, sodium bis(fluorosulfonyl)imide, or sodium bis(trifluoromethanesulfonyl)imide, and optionally comprises one or more of sodium trifluoromethanesulfonate, sodium bis(fluorosulfonyl)imide, or sodium bis(trifluoromethanesulfonyl)imide.

8. The electrolyte composition according to any one of claims 5 to 7, **characterized in that** the organic solvent comprises one or more of an ether organic solvent, an ester organic solvent, or a sulfur-containing organic solvent; and the organic solvent comprises one or more of monoglyme, diglyme, triglyme, tetraglyme, ethylene carbonate, propylene carbonate, butylene carbonate, vinylene carbonate, fluoroethylene carbonate, ethyl methyl carbonate, dimethyl carbonate, diethyl carbonate, dipropyl carbonate, or dimethyl sulfoxide, and optionally comprises monoglyme.

9. The electrolyte composition according to any one of claims 5 to 8, **characterized in that** the ionic liquid comprises one or more of 1-butyl-3-methylimidazole chloride, 1-alkyl-3-methylimidazole tetrafluoroborate, N-alkyl-N-methylpiperidine bis(trifluoromethanesulfonyl)imide, 5-azoniaspiro[4,4]nonane hexafluorophosphate, trihexyl(tetradecyl)phosphine bis(trifluoromethanesulfonyl)amide, or tetrabutylphosphine hexafluorophosphate, and optionally comprises one or more of N-alkyl-N-methylpiperidine bis(trifluoromethanesulfonyl)imide or trihexyl(tetradecyl)phosphine bis(trifluoromethanesulfonyl)amide.

10. The electrolyte composition according to any one of claims 6 to 9, **characterized in that** the polymer comprises one or more of polyethylene oxide, polyethylene glycol, polyvinylpyrrolidone, polymethyl methacrylate, polyvinylidene difluoride, polyvinyl alcohol, or polyacrylamide, and optionally comprises one or more of polyethylene oxide or polyethylene glycol.

11. The electrolyte composition according to any one of claims 5 to 10, **characterized in that** the suspended particles comprise one or more of gaseous silica, aluminum oxide, sodium oxide, lithium oxide, sodium fluoride, lithium fluoride, or polyurethane, and optionally comprise one or more of gaseous silica, sodium oxide, or lithium oxide.

12. The electrolyte composition according to any one of claims 5 to 11, **characterized in that** the electrolyte salt comprises one or more of sodium trifluoromethanesulfonate, sodium bis(fluorosulfonyl)imide, or sodium bis(trifluoromethanesulfonyl)imide; the organic solvent comprises monoglyme; the ionic liquid comprises one or more of N-alkyl-N-methylpiperidine bis(trifluoromethanesulfonyl)imide or trihexyl(tetradecyl)phosphine bis(trifluoromethanesulfonyl)amide; the polymer comprises one or more of polyethylene oxide or polyethylene glycol; and the suspended particles comprise one or more of gaseous silica, sodium oxide, or lithium oxide.

13. The electrolyte composition according to any one of claims 5 to 12, **characterized in that** the electrolyte salt comprises one or more of sodium trifluoromethanesulfonate, sodium bis(fluorosulfonyl)imide, or sodium bis(trifluoromethanesulfonyl)imide; the organic solvent comprises monoglyme; and the suspended particles comprise one or more of gaseous silica, sodium oxide, or lithium oxide.

14. The electrolyte composition according to any one of claims 6 to 12, **characterized in that** the electrolyte salt comprises one or more of sodium trifluoromethanesulfonate, sodium bis(fluorosulfonyl)imide, or sodium bis(trifluoromethanesulfonyl)imide; the organic solvent comprises monoglyme; the polymer comprises one or more of polyethylene oxide or polyethylene glycol; and the suspended particles comprise one or more of gaseous silica, sodium oxide, or lithium oxide.

15. The electrolyte composition according to any one of claims 5 to 12, **characterized in that** the electrolyte salt comprises one or more of sodium trifluoromethanesulfonate, sodium bis(fluorosulfonyl)imide, or sodium bis(trifluoromethanesulfonyl)imide; the ionic liquid comprises one or more of N-alkyl-N-methylpiperidine bis(trifluoromethanesulfonyl)imide or trihexyl(tetradecyl)phosphine bis(trifluoromethanesulfonyl)amide; and the suspended particles comprise one or more of gaseous silica, sodium oxide, or lithium oxide.

16. The electrolyte composition according to any one of claims 6 to 12, **characterized in that** the electrolyte salt comprises one or more of sodium trifluoromethanesulfonate, sodium bis(fluorosulfonyl)imide, or sodium bis(trifluoromethanesulfonyl)imide; the ionic liquid comprises one or more of N-alkyl-N-methylpiperidine bis(trifluoromethanesulfonyl)imide or trihexyl(tetradecyl)phosphine bis(trifluoromethanesulfonyl)amide; the polymer comprises one or more of polyethylene oxide or polyethylene glycol; and the suspended particles comprise one or more of gaseous silica, sodium oxide, or lithium oxide.

17. The electrolyte composition according to any one of claims 6 to 16, **characterized in that**, based on a total mass of the non-Newtonian fluid electrolyte composition, a mass percent of the electrolyte salt is 5% to 20%, a mass percent of the organic solvent is 20% to 60%, a mass percent of the ionic liquid is 20% to 60%, a mass percent of the polymer is 0% to 40%, and a mass percent of the suspended particles is greater than 0 and less than or equal to 20%.

18. The electrolyte composition according to any one of claims 1 to 17, **characterized in that** compression strength of the non-Newtonian fluid electrolyte composition is 35 kN to 200 kN.

19. A secondary battery, wherein the secondary battery comprises a positive electrode plate and the electrolyte composition according to any one of claims 1 to 18.

20. The secondary battery according to claim 19, **characterized in that** the secondary battery is a sodium metal battery.

21. The secondary battery according to claim 19 or 20, **characterized in that** the secondary battery is an anode-free sodium battery.

22. The secondary battery according to any one of claims 19 to 21, **characterized in that** the positive electrode plate comprises a positive active material; and the positive active material comprises at least one of a layered transition metal oxide, a polyanionic compound, or a Prussian blue compound, comprising one or more of NaNi_{1/3}Fe_{1/3}Mn_{1/3}O₂, Na(Cu_{1/9}Ni_{2/9}Fe_{1/3}Mn_{1/3})O₂, Na_{2/3}Ni_{1/6}Mn_{2/3}Cu_{1/9}Mg_{1/18}O₂, Na₄Fe₃(PO₄)₂P₂O₇, NaFePO₄, Na₃V₂(PO₄)₃, Na_{1.9}CoFe(CN)₆, Na₂NiFe(CN)₆, or NaMnFe(CN)₆.

23. The secondary battery according to claim 22, **characterized in that** a surface of a positive active material is coated with a coating layer; the coating layer comprises one or more of a carbon material, ZrO₂, TiO₂, polyaniline, polypyrrole, poly(3,4-ethylenedioxythiophene), aluminum oxide, zinc oxide, titanium oxide, zirconium oxide, magnesium oxide, silicon oxide, lanthanum oxide, sodium fluoride, lithium fluoride, or aluminum fluoride; and the carbon material comprises one or more of amorphous carbon, graphite, or graphene.

24. A battery module, **characterized in that** the battery module comprises the secondary battery according to any one of claims 19 to 23.

25. A battery pack, **characterized in that** the battery pack comprises the secondary battery according to any one of claims 19 to 23 or the battery module according to claim 24.

26. An electrical device, **characterized in that** the electrical device comprises at least one of the secondary battery according to any one of claims 19 to 23, the battery module according to claim 24, or the battery pack according to claim 25.
